# EUROPÄISCHE PATENTSCHRIFT

(11) **EP 4 115 509 B1**
(45) Veröffentlichungstag und Bekanntmachung des Hinweises auf die Patenterteilung: **24.04.2024**
(21) Anmeldenummer: 21710220.1
(22) Anmeldetag: 03.03.2021
(51) Int. Cl.: H02K 41/03, B65G 54/02, H02K 16/00

(54) **TRANSPORTEINRICHTUNG**
TRANSPORT DEVICE
DISPOSITIF DE TRANSPORT

(30) Priorität: 05.03.2020 AT 501682020
(43) Veröffentlichungstag der Anmeldung: 11.01.2023
(73) Patentinhaber: B&R Industrial Automation GmbH, 5142 Eggelsberg (AT)
(72) Erfinder: HAUER, Michael, 5142 Eggelsberg (AT); FLIXEDER, Stefan, 5142 Eggelsberg (AT); HAUDUM, Martin, 5142 Eggelsberg (AT)
(74) Vertreter: Patentanwälte Pinter & Weiss OG
(86) Internationale Anmeldenummer: PCT/EP2021/055250
(87) Internationale Veröffentlichungsnummer: WO 2021/175885

(56) Entgegenhaltungen:
- EP-A1- 0 338 100
- EP-B1- 3 172 156
- WO-A1-2019/243630
- DE-A1- 19 512 073
- GB-A- 1 330 372
- US-A- 5 947 361

## Beschreibung

Die Erfindung betrifft eine Transporteinheit für eine Transporteinrichtung in Form eines Planarmotors mit zumindest einem Transportsegment, das eine Transportebene ausbildet, wobei an der Transporteinheit Antriebsmagnete vorgesehen sind, um mit Antriebsspulen oder beweglichen Permanentmagneten des Transportsegments magnetisch zusammenzuwirken oder wobei an der Transporteinheit beweglichen Permanentmagneten oder Antriebsspulen vorgesehen sind, um mit Antriebsmagneten des Transportsegments magnetisch zusammenzuwirken, um die Transporteinheit in der Transportebene zumindest zweidimensional zu bewegen. Weiters betrifft die Erfindung eine Transporteinrichtung mit einer Transporteinheit sowie ein Verfahren zum Betreiben einer solchen Transporteinrichtung.

Planarmotoren sind grundsätzlich im Stand der Technik bekannt. Die US 9,202,719 B2 offenbart beispielsweise den grundlegenden Aufbau und die Funktionsweise eines solchen Planarmotors. Ein Planarmotor weist im Wesentlichen eine, üblicherweise von einem oder mehreren Transportsegmenten ausgebildete Transportebene auf, in der eine oder mehrere Transporteinheiten zumindest zweidimensional bewegt werden können. Eine auf die Transporteinheiten wirkende Antriebskraft wird durch ein Zusammenwirken der Magnetfelder der Transportsegmente und der Transporteinheiten erzeugt. Um eine Bewegung der Transporteinheit in eine bestimmte Bewegungsrichtung zu bewirken, muss zumindest eines der Magnetfelder, also jenes des Transportsegments und/oder der Transporteinheit, zeitlich veränderlich sein, um der Bewegung der Transporteinheit zu folgen. Meist ist jedoch nur ein Magnetfeld, in der Regel jenes am Transportsegment zeitlich veränderlich und das jeweils andere Magnetfeld, in der Regel das an den Transporteinheiten, ist üblicherweise konstant.

Zeitlich veränderliche Magnetfelder können beispielweise durch Spulen (Elektromagnete) oder bewegte (z.B.: rotierende) Permanentmagnete erzeugt werden, die sowohl an der Transporteinheit als auch am Transportsegment angeordnet sein können. Die Spulen werden häufig auch als Antriebsspulen bezeichnet. Zeitlich unveränderliche, also konstante, Magnetfelder werden typischerweise mit Hilfe von Permanentmagneten erzeugt. Häufig werden diese Komponenten als Antriebsmagnete bezeichnet. Auch diese können, je nach Ausführungsform des Planarmotors, sowohl an der Transporteinheit als auch am Transportsegment angeordnet sein. Aufgrund der einfacheren Ansteuerung sind die Antriebsspulen oftmals am Transportsegment des Planarmotors angeordnet und die Antriebsmagnete sind an der Transporteinheit angeordnet.

Die Antriebsspulen werden in der Regel von einer Steuerungseinheit angesteuert, um ein bewegtes Magnetfeld in die gewünschte Bewegungsrichtung zu erzeugen. An der Transporteinheit sind Antriebsmagnete zumindest zweidimensional verteilt angeordnet, die mit dem bewegten Magnetfeld zusammenwirken, sodass vorgegebene Kräfte- und Momente auf die Transporteinheit in Richtung der Bewegungsfreiheitsgrade der Transporteinheit (maximal drei translatorische Bewegungsfreiheitsgrade und drei rotatorische Bewegungsfreiheitsgrade) beliebig ausgeübt werden können. Jene Kräfte und Momente, welche eine Bewegung der Transporteinheit in die Richtung eines der Bewegungsfreiheitsgrade bewirken, werden üblicherweise als Antriebskräfte bezeichnet. Jene Kräfte und Momente welche vom Transportsegment auf die Transporteinheit ausgeübt werden, welche der Aufrechterhaltung des aktuellen Bewegungszustands dienen, werden üblicherweise als Schwebekräfte bezeichnet. Durch die Schwebekraft kann beispielsweise ein Luftspalt zwischen der Transporteinheit und den Transportsegmenten erzeugt und aufrechterhalten und/oder Prozesskräfte bzw. -momente kompensiert werden. Auch bei einer nicht horizontal ausgerichteten Transportebene kann beispielsweise die Position der Transporteinheit durch eine entsprechende Schwebekraft konstant gehalten werden.

Um die für den Planarmotor charakteristische zweidimensionale Bewegung der Transporteinheit zu ermöglichen, bedarf es einem zweidimensionalen zusammenwirken der Magnetfelder der Transportsegmente und Transporteinheiten, wobei eines der beiden Magnetfelder in zumindest zwei Dimensionen oder beide Magnetfelder in zumindest einer Dimension zeitlich veränderlich sein müssen. Die Antriebsspulen und die Antriebsmagnete sind dabei vorteilhafterweise so angeordnet, dass neben einer eindimensionalen Bewegung entlang der von der Transportebene aufgespannten Achsen auch komplexere zweidimensionale Bewegungen der Transporteinheit in der Transportebene möglich sind. Wenn die Antriebsspulen und die Antriebsmagnete vorteilhafterweise so angeordnet sind, dass die Transporteinheit in Richtung aller sechs Freiheitsgrade mit Hilfe der Antriebs- und Schwebekräfte geführt und bewegt werden kann, kann eine mechanische Führung entfallen. Man spricht in diesem Fall häufig von einem lagerlosen Planarmotor.

Ein Planarmotor kann beispielsweise als Transporteinrichtung in einem Produktionsprozess genutzt werden, wobei sehr flexible Transportprozesse mit komplexen Bewegungsprofilen realisiert werden können.

In der EP 3 172 156 B1 und der EP 3 172 134 B1 sind beispielsweise solche Anwendungen eines Planarmotors als Transporteinrichtung gezeigt. Dabei sind z.B. zwei Planarmotoren aneinander angrenzend angeordnet und auf beiden Planarmotoren sind Transporteinheiten bewegbar. Dadurch ist eine voneinander unabhängige Bewegung von Transporteinheiten in zwei Ebenen möglich. In einer anderen Ausführung interagieren jeweils ein Planarmotor und ein oder mehrere Stetigförderer, um Produkte in bestimmter Weise zu manipulieren. Die Transporteinheiten des Planarmotors sind jeweils in einer vertikalen Ebene zweidimensional individuell bewegbar. Der Planarmotor ermöglicht damit zwar eine sehr flexible Bewegung in der vertikalen Ebene, allerdings ist man durch die Stetigförderer in der Flexibilität eingeschränkt.

Die WO 2018/176137 A1 offenbart eine Transporteinrichtung in Form eines Planarmotors, bei der Transporteinheiten mittels relativ komplexer mechanischer Konstruktionen fest miteinander verbunden sind. Die mechanische Konstruktion dient als eine Art Manipulationsvorrichtung. Durch eine Relativbewegung der Transporteinheiten wird die Manipulationsvorrichtung betätigt, beispielsweise um eine vertikale Hebebewegung auszuführen.

WO 2019/243630 A1 offenbart eine Transporteinrichtung in Form eines Langstatorlinearmotors mit einer Transporteinheit und mit einem Produktträger, die über einen Koppelpunkt gekoppelt werden können, sodass der Produktträger von der Transporteinheit angetrieben werden kann. WO 2019/243630 A1 offenbart aber keinen Planarmotor und auch keine Transporteinheit für einen Planarmotor.

Es ist deshalb eine Aufgabe der Erfindung, eine flexiblere Prozessführung bei einer Transporteinrichtung in Form eines Planarmotors zu ermöglichen.

Erfindungsgemäß wird die Aufgabe mit der eingangs genannten Transporteinheit dadurch gelöst, dass an der Transporteinheit zumindest eine Kopplungsvorrichtung vorgesehen ist, die dazu ausgebildet ist, die Transporteinheit mit einer Kopplungseinheit durch eine Relativbewegung zwischen der Transporteinheit und der Kopplungseinheit in der Transportebene lösbar zu einem Verbund zu koppeln, wobei die Kopplungsvorrichtung dazu ausgebildet ist, im gekoppelten Verbund mit der Kopplungseinheit derart zusammenzuwirken, dass eine Relativbewegung zwischen der Transporteinheit und der Kopplungseinheit in zumindest einem Bewegungsfreiheitsgrad begrenzt ist, wobei die Kopplungseinheit entweder eine weitere Transporteinheit ist und die zumindest zwei Transporteinheiten, mittels der Kopplungsvorrichtungen zu einem Transporteinheitsverbund koppelbar sind, in welchem die Transporteinheiten gemeinsam in der Transportebene bewegbar sind oder dass die eine Kopplungseinheit ein Objektträger zur Aufnahme eines Objekts ist und die Transporteinheit mit dem Objektträger zu einem Objektträgerverbund koppelbar ist, in welchem der Objektträger mittels der Transporteinheit in der Transportebene bewegbar ist. Dadurch können Transporteinheiten rein über die Steuerung gekoppelt werden, ohne dass dafür ein manueller Eingriff erforderlich ist. Das erlaubt eine sehr flexible Prozessführung. Die Kopplungsvorrichtungen sind dabei vorzugsweise formschlüssig und/oder kraftschlüssig ausgeführt. Durch Bildung eines Transporteinheitsverbunds können beispielsweise größere Kräfte erzeugt werden, als mit einer einzelnen Transporteinheit. Dadurch kann beispielsweise eine größere Last transportiert werden, als mit einer einzelnen Transporteinheit. In vorteilhafterweise können dadurch auch größere Prozesskräfte eines Arbeitsprozesses aufgenommen werden und/oder es können größere Objekte transportiert werden. Der Objektträgerverbund hat beispielsweise den Vorteil, dass verschiedene Objektträger verwendet werden können, die beispielsweise in einfacher Weise nur durch die Relativbewegung getauscht werden können.

Vorzugsweise weist die Kopplungsvorrichtung zumindest einen Teil einer Sperrvorrichtung auf, wobei die Sperrvorrichtung dazu ausgebildet ist, die Relativbewegung zwischen der Transporteinheit und der Kopplungseinheit im Verbund in einem zusätzlichen Bewegungsfreiheitsgrad zu begrenzen. Die Sperrvorrichtung ist dabei vorzugsweise durch eine Relativbewegung zwischen der Transporteinheit und der Kopplungseinheit betätigbar oder es sind eine Betätigungseinheit zur Betätigung der Sperrvorrichtung sowie ein Aktuator zur Betätigung der Betätigungseinheit vorgesehen. Dadurch wird gewährleistet, dass sich der Verbund nicht in unerwünschter Weise löst und die Transporteinheit und die Kopplungseinheit entkoppelt werden.

Es ist vorteilhaft, wenn in der Kopplungsvorrichtung der Transporteinheit zumindest ein Koppelelement und/oder zumindest eine Aufnahmeeinheit vorgesehen ist, wobei das Koppelelement dazu vorgesehen ist, zum Koppeln mit der Aufnahmeeinheit zusammenzuwirken. Dadurch wird eine formschlüssige Kopplung geschaffen, mit der mehrere Bewegungsfreiheitsgrade gesperrt werden können.

Als Teil der Sperrvorrichtung ist vorzugsweise an zumindest einem Koppelelement und/oder an zumindest einer Aufnahmeeinheit zumindest eine Klemmöffnung und/oder zumindest ein Klemmelement vorgesehen. Dadurch kann in einfacher Weise ein zusätzlicher Bewegungsfreiheitsgrad gesperrt werden.

In vorteilhafter Weise ist in der Kopplungsvorrichtung zumindest ein Magnetelement vorgesehen. Dadurch Die Kopplungsvorrichtung kann dabei rein magnetisch ausgeführt sein oder es können Magnete vorgesehen werden, welche den Kopplungsvorgang unterstützen.

Die Transporteinheit der Erfindung ist vorzugsweise Teil einer Transporteinrichtung in Form eines Planarmotors, wobei in der Transporteinrichtung zumindest eine Kopplungseinheit vorgesehen ist, an welcher zumindest eine Kopplungsvorrichtung zur lösbaren Kopplung der Transporteinheit mit der Kopplungseinheit angeordnet ist, wobei die Transporteinheit und die Kopplungseinheit durch eine Relativbewegung in der Transportebene mittels der Kopplungsvorrichtungen zumindest zeitweise zu einem Verbund koppelbar sind und dass die Kopplungsvorrichtungen im gekoppelten Verbund zusammenwirken, um eine Relativbewegung zwischen der Transporteinheit und der Kopplungseinheit in zumindest einem Bewegungsfreiheitsgrad zu begrenzen, wobei die zumindest eine Kopplungseinheit eine weitere Transporteinheit ist und die zumindest zwei Transporteinheiten mittels der Kopplungsvorrichtungen zu einem Transporteinheitsverbund koppelbar sind, in welchem die Transporteinheiten gemeinsam in der Transportebene bewegbar sind oder wobei die zumindest eine Kopplungseinheit ein Objektträger zur Aufnahme eines Objekts ist und die Transporteinheit mit dem Objektträger zu einem Objektträgerverbund koppelbar ist, in welchem der Objektträger mittels der Transporteinheit in der Transportebene bewegbar ist.

Analog wie die Transporteinheit kann auch die Kopplungsvorrichtung der Kopplungseinheit formschlüssig und/oder kraftschlüssig ausgeführt sein. Alternativ oder zusätzlich kann die Kopplungsvorrichtung der Kopplungseinheit wiederum einen Teil einer Sperrvorrichtung aufweisen, wobei die Sperrvorrichtung dazu ausgebildet ist, eine Relativbewegung zwischen der Transporteinheit und der Kopplungseinheit im Verbund in einem zusätzlichen Bewegungsfreiheitsgrad zu begrenzen.

In der Transporteinrichtung kann eine Betätigungseinheit zur Betätigung der Sperrvorrichtung vorgesehen sein, wobei die Betätigungseinheit vorzugsweise als ortsfeste, insbesondere mechanische oder magnetische Betätigungseinheit ausgebildet sein kann. Dadurch kann die Sperrvorrichtung auch von außerhalb der Transporteinheit betätigt werde, beispielsweise durch eine Relativbewegung der Transporteinheit relativ zur ortsfesten Betätigungseinheit. Alternativ oder zusätzlich können analog wie an der Transporteinheit auch an der Kopplungseinheit eine Betätigungseinheit zur Betätigung der Sperrvorrichtung und ein Aktuator zur Betätigung der Betätigungseinheit vorgesehen sein.

In der Kopplungsvorrichtung der Kopplungseinheit kann wiederum zumindest ein Koppelelement und/oder zumindest eine Aufnahmeeinheit zur lösbaren Kopplung mit der Transporteinheit vorgesehen sein. Die Sperrvorrichtung kann zumindest ein Klemmelement und zumindest eine damit zusammenwirkende Klemmöffnung aufweisen, wobei das Klemmelement am Koppelelement angeordnet sein kann und die Klemmöffnung in der Aufnahmeeinheit angeordnet sein kann oder umgekehrt.

Analog wie die Transporteinheit kann auch die die Kopplungsvorrichtung der Kopplungseinheit zumindest ein Magnetelement aufweisen, um eine magnetische Anziehungskraft zwischen der Transporteinheit und der Kopplungseinheit zu erzeugen.

Die die Transporteinrichtung wird vorzugsweise gemäß einem Verfahren so betrieben, dass die zumindest eine Transporteinheit in der Transportebene relativ zur Kopplungseinheit bewegt wird oder umgekehrt und dass die Transporteinheit und die Kopplungseinheit durch die Relativbewegung mittels der Kopplungsvorrichtungen zu einem Verbund gekoppelt werden, wobei im gekoppelten Zustand vorzugsweise die Sperrvorrichtung betätigt wird.

Es ist vorteilhaft, dass als Kopplungseinheit eine weitere Transporteinheit verwendet wird, dass die Transporteinheiten zu einem Transporteinheitsverbund gekoppelt werden und dass der Transporteinheitsverbund in der Transportebene bewegt, indem zumindest Teile der Antriebsmagnete einer der zumindest zwei Transporteinheiten mit den Antriebsspulen oder den beweglichen Antriebsmagneten des Transportsegments magnetisch zusammenwirken oder indem zumindest Teile der Antriebsspulen oder der beweglichen Antriebsmagnete einer der zumindest zwei Transporteinheiten mit den Antriebsmagneten des Transportsegments magnetisch zusammenwirken.

Vorteilhafterweise wird der Transporteinheitsverbund in eine Arbeitsstation bewegt, in der ein Arbeitsprozess durchgeführt wird, bei dem Prozesskräfte auf den Transporteinheitsverbund wirken und/oder der Transporteinheitsverbund wird mit zumindest einem Objekt beladen, wobei der Transporteinheitsverbund nach Beendigung des Arbeitsprozesses in die zumindest zwei Transporteinheiten entkoppelt wird.

Die gegenständliche Erfindung wird nachfolgend unter Bezugnahme auf die Figuren 1 bis 17b näher erläutert, die beispielhaft, schematisch und nicht einschränkend vorteilhafte Ausgestaltungen der Erfindung zeigen. Dabei zeigt
Fig.1a-1b ein Beispiel einer Transporteinrichtung in Form eines Planarmotors in einer Draufsicht und in einer Vorderansicht,
Fig.2 eine mögliche Anordnung von Antriebsspulen an einem Transportsegment,
Fig.3a-3b eine mögliche Anordnung von beweglichen Permanentmagneten an einem Transportsegment,
Fig.4a-4b eine Transporteinheit einer Transporteinrichtung in Form eines Planarmotors mit einer Kopplungsvorrichtung in einer Seitenansicht und einer Ansicht von unten,
Fig.4c eine Transporteinheit mit einer Kopplungsvorrichtung in einer Ansicht von unten mit einer alternativen Anordnung der Antriebsmagnete,
Fig.5 eine Draufsicht auf zwei Transporteinheiten mit mehreren Kopplungsvorrichtungen,
Fig.6 eine Kopplungsvorrichtung mit einem Bajonettverschluss,
Fig.7 eine Draufsicht auf zwei Transporteinheiten mit einer Kopplungsvorrichtung und einer externen Betätigungseinheit,
Fig.8-10 jeweils zwei Transporteinheiten mit Kopplungsvorrichtungen in einer Seitenansicht im entkoppelten und im gekoppelten Zustand,
Fig.11a-11c jeweils eine Draufsicht auf zwei Transporteinheiten mit magnetischen Kopplungsvorrichtungen,
Fig.12a-12f verschiedene Varianten eines Transporteinheitsverbunds,
Fig.13 eine Flaschenbefüllanlage mit einer Transporteinrichtung gemäß der Erfindung
Fig.14a-17b verschiedene Ausführungsbeispiel der Kopplung einer Transporteinheit und eines Objektträgers.

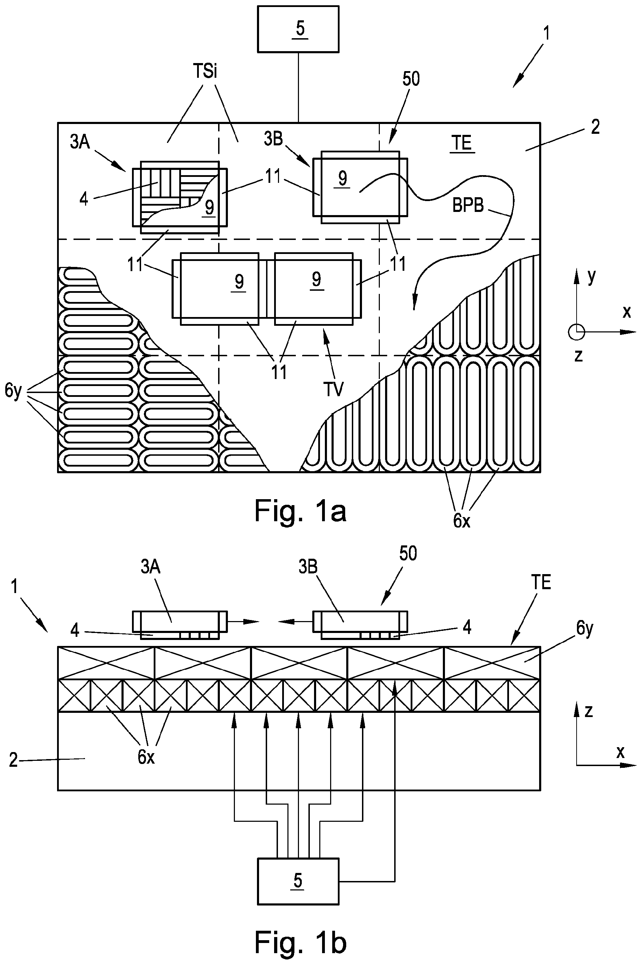

In Fig.1a ist eine beispielhafte Ausgestaltung einer Transporteinrichtung 1 gemäß der Erfindung in einer Draufsicht dargestellt. Fig.1b zeigt die Transporteinrichtung 1 einer Vorderansicht. Die Transporteinrichtung 1 weist einen Stator 2 auf, der eine Transportebene TE ausbildet. Im dargestellten Beispiel ist die Transportebene TE eine horizontale Ebene, mit einer Hochachse Z, einer Längsachse X und einer Querachse Y. Natürlich wäre aber auch eine andere Anordnung möglich, beispielsweise vertikal oder in einem bestimmten Winkel geneigt. Das hängt im Wesentlichen von der gewünschten Verwendung der Transporteinrichtung 1 ab. Der Stator 2 ist hier aus einer Mehrzahl i von Transportsegmenten TSi aufgebaut, die aneinander angrenzen, um die Transportebene TE auszubilden. Dadurch kann die Transporteinrichtung 1 modular aufgebaut werden und es können Transportebenen TEi mit verschieden großen Flächen realisiert werden. Natürlich ist dieser modulare Aufbau aber nur optional und der Stator 2 könnte auch nur durch eine einzige Baugruppe ausgebildet sein. In der Transportebene TE des Stators 2 können eine oder mehrere Transporteinheiten (nachfolgend allgemein mit dem Bezugszeichen 3 versehen), zumindest zweidimensional bewegt werden. Im dargestellten Beispiel sind das die Transporteinheiten 3A, 3B. Beispielsweise wäre eine Bewegung nur in einer Achsrichtung entlang der Längsachse X oder der Querachse Y möglich oder auch ein zweidimensionales Bewegungsprofil mit einer Y-Koordinate und einer X-Koordinate, wie durch das Bewegungsprofil BPB der Transporteinheit 3B angedeutet ist. Bei entsprechender Ausführung der Transporteinrichtung 1 können auch die anderen vier Bewegungsfreiheitsgrade zumindest eingeschränkt verwendet werden.

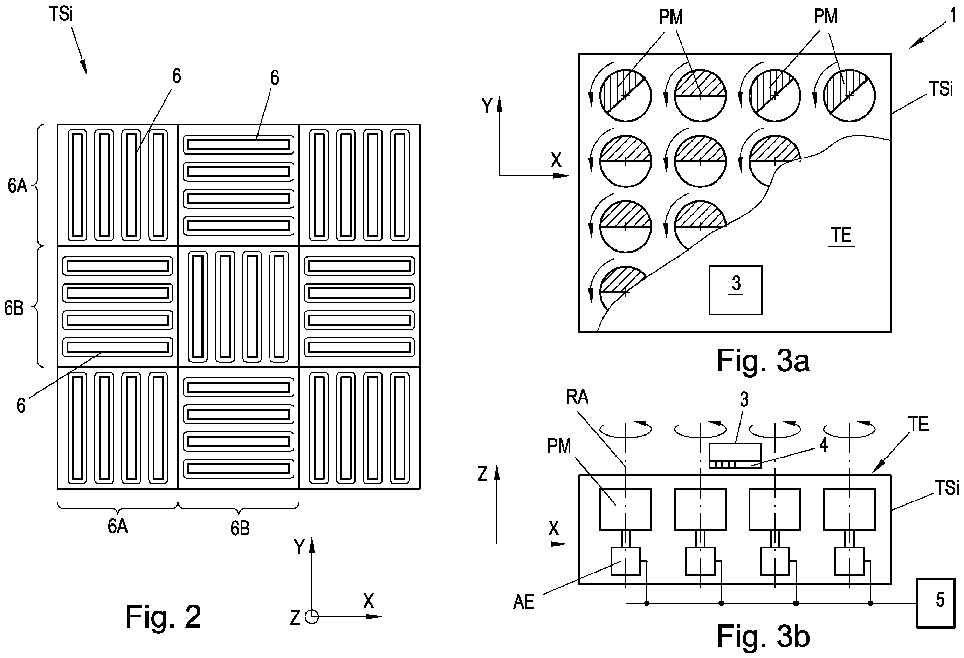

Am Stator 2, insbesondere an den Transportsegmenten TSi, sind dazu Antriebsspulen 6 vorgesehen, die von einer (oder mehreren) Planarmotor-Steuerungseinheit(en) 5 (Hardware und/oder Software) angesteuert werden. Als Antriebsspulen 6 kommen beispielsweise gewickelte Drahtspulen zum Einsatz oder auf einer Leiterplatte angeordnete, sogenannte PCB-Spulen (PCB=printed circuit board). In die Antriebsspulen 6 kann ein elektrischer Strom eingeprägt werden, um ein Magnetfeld zu erzeugen. Eine dafür möglicherweise erforderliche Leistungselektronik kann in der Planarmotor-Steuerungseinheit 5 oder am Stator 2 (z.B. an den Transportsegmenten TSi) angeordnet sein. Durch entsprechende Ansteuerung nebeneinander angeordneter Antriebsspulen 6 kann ein im Wesentlichen bewegtes Magnetfeld erzeugt werden. Die Antriebsspulen 6 sind vorteilhafterweise so am Stator 2 angeordnet, dass sich das Magnetfeld in beliebige Richtungen in der Transportebene TE erstrecken kann, um entsprechende Bewegungsprofile der Transporteinheiten 3 zu realisieren. Als Transportebene TE ist hier keine Ebene im mathematischen Sinn zu verstehen, sondern eine durch den jeweiligen Stator 2 begrenzte ebene Transportfläche, auf der sich die Transporteinheiten 3 bewegen können. Die Antriebsspulen 6 können am Stator 2 in einer Ebene angeordnet sein, z.B. in mehreren jeweils um 90° versetzten Spulengruppen (siehe Fig.2) oder in einer Fischgrätanordnung (siehe z.B.: Jansen, J. W., 2007. Magnetically levitated planar actuator with moving magnets. In: electromechanical analysis and Design Eindhoven: Technische Universiteit Eindhoven DOI: 10.6100/IR630846). Die Antriebsspulen 6 können aber auch in mehreren, übereinanderliegenden Ebenen angeordnet sein, wie nachfolgend erläutert wird.

Im gezeigten Beispiel in Fig.1a+b sind die Antriebsspulen 6 in zwei Schichten in Z-Richtung übereinander angeordnet. In einer ersten Schicht sind Antriebsspulen 6y so orientiert, dass sie zur Kraftbildung auf die Transporteinheit 3 in Y- und Z-Richtung verwendet werden können. In einer zweiten Schicht sind die Antriebsspulen 6x so orientiert, dass sie zur Kraftbildung auf die Transporteinheit 3 in X- und Z-Richtung verwendet werden können. Beide Schichten erstrecken sich im Wesentlichen vollständig über die gesamte Transportebene TE, um einen möglichst großen Bewegungsbereich für die Transporteinheiten 3 zu bilden. Im dargestellten Beispiel liegt die erste Schicht mit den Antriebsspulen 6y in Z-Richtung näher an der Oberfläche und damit näher an den Transporteinheiten 3, als die zweite Schicht mit den Antriebsspulen 6x, wie in Fig.1b ersichtlich ist. Natürlich ist dies nur beispielhaft und die Anordnung könnte auch umgekehrt sein.

Die Antriebsspulen 6x und 6y müssen auch nicht orthogonal zueinander ausgerichtet sein. Es könnten auch noch eine oder mehrere weitere Schichten von Antriebsspulen 6 vorgesehen sein. Weiters können die Antriebsspulen 6 einer Schicht in einem beliebigen Winkel zu den Antriebsspulen 6 in den benachbarten Schichten angeordnet sein. Die Gesamtheit der Antriebsspulen 6 erlaubt jedoch eine Bewegung sowohl in X- als auch in Y-Richtung. Die Antriebsspulen 6 sind vorzugsweise als sogenannte Luftspulen ohne Eisenkern ausgeführt, um die permanentmagnetische Anziehungskraft zwischen Transporteinheiten 3 und den Transportsegmenten TSi des Stators 2 zu reduzieren. Dadurch werden die Transporteinheiten 3 durch die Antriebsmagnete 4 weniger stark in Richtung der Transportebene TE angezogen. An den Transporteinheiten 3 sind jeweils Antriebsmagnete 4 angeordnet, beispielsweise Permanentmagnete, die mit den Antriebsspulen 6 zusammenwirken, um eine Antriebskraft auf die Transporteinheit 3 auszuüben.

Je nach Ansteuerung der Antriebsspulen 6 wird damit ein bewegtes Magnetfeld erzeugt, das mit den Antriebsmagneten 4 zusammenwirkt, um die Transporteinheit 3 zu bewegen. Im Betrieb ist zwischen den Antriebsspulen 6 des Stators 2 und den Antriebsmagneten 4 einer Transporteinheit 3 ein Luftspalt vorgesehen. Neben der zweidimensionalen Bewegung in der Transportebene TE ist auch eine gewisse Bewegung der Transporteinheiten 3 in Hochrichtung möglich, also normal auf die Transportebene TE, hier in Z-Richtung. Die Antriebsspulen 6 bewirken also auch (Schwebe-)Kräfte in Z-Richtung. Durch eine entsprechende Ansteuerung der Antriebsspulen 6 kann der Luftspalt in begrenztem Maße erhöht und verringert werden, wodurch die Transporteinheit 3 in Hochrichtung bewegt werden kann. Die Größe des verfügbaren Bewegungsspielraums in Hochrichtung hängt dabei im Wesentlichen von der konstruktiven Ausgestaltung der Transporteinrichtung 1 ab, insbesondere vom maximal erzeugbaren Magnetfeld der Antriebsspulen 6 und der Antriebsmagnete 4, sowie der Masse und Belastung der Transporteinheit (z.B. vom Gewicht eines transportierten Objektes). Je nach Größe und Auslegung der Transporteinrichtung 1 kann der verfügbare Bewegungsbereich in Hochrichtung beispielsweise im Bereich weniger mm bis mehrere Zentimeter betragen. Auch eine rotative Bewegung der Transporteinheiten 3A, 3B um die Z-Achse sowie in begrenztem Maße auch um die Y- und X-Achse ist möglich.

Im dargestellten Beispiel kann auf eine externe Lagerung der Transporteinheiten 3 verzichtet werden. Die Transporteinheiten 3 schweben rein durch die von den Antriebsmagneten 4 der Transporteinheit 3 und den Antriebsspulen 6 des Transportsegments TSi erzeugte magnetische (Schwebe-)kraft, die hier in Z-Richtung wirkt. Der gewünschte Luftspalt zwischen Antriebsspulen 6 und Antriebsmagneten 4 muss aber nicht notwendigerweise rein magnetisch erzeugt bzw. aufrechterhalten werden, sondern die Transporteinheiten 3 können auch in beliebiger anderer Weise gelagert werden. Dazu können beispielsweise beliebige geeignete Mechanismen zusammenwirken, beispielsweise mechanische, magnetische, elektromagnetische, pneumatische, usw. Im gezeigten Beispiel ist eine Planarmotor-Steuerungseinheit 5 vorgesehen, mit welcher die Antriebsspulen 6 des Stators 2 angesteuert werden können. Die Planarmotor-Steuerungseinheit 5 kann z.B. auch mit einer (nicht dargestellten) übergeordneten Steuerungseinheit verbunden sein, beispielsweise um mehrere Statoren 2 oder auch mehrere Transporteinrichtungen 1 gemeinsam zu steuern und zu synchronisieren.

Die Planarmotor-Steuerungseinheiten 5 könnten aber natürlich auch in die übergeordnete Steuerungseinheit integriert sein. Es kann auch vorgesehen sein, dass für jedes Transportsegment TSi, oder eine Gruppe von Transportsegmenten TSi, jeweils eine Segmentsteuereinheit (Hardware und/oder Software) vorgesehen ist, die auch in einer Planarmotor-Steuerungseinheit 5 oder übergeordneten Steuerungseinheit integriert sein kann oder als separate Einheit ausgebildet sein kann. Die Planarmotor-Steuerungseinheit 5 und/oder die übergeordnete Steuerungseinheit kann z.B. an eine nicht dargestellte Benutzerschnittstelle, beispielsweise einen Computer, angebunden sein, über den die Transporteinheit 1 gesteuert werden kann. Über die Planarmotor-Steuerungseinheit 5 und/oder die übergeordnete Steuerungseinheit können die Bewegungsprofile von Transporteinheiten 3 miteinander synchronisiert bzw. aufeinander abgestimmt werden, beispielsweise um eine Kollision von Transporteinheiten 3 oder von damit transportierten Objekten zu vermeiden. Auf der Planarmotor-Steuerungseinheit 5 läuft ein Steuerungsprogramm, das die gewünschten Bewegungsprofile der Transporteinheiten 3 realisiert. Der Aufbau und die Funktionsweise eines Planarmotors sind aber grundsätzlich bekannt, weshalb an dieser Stelle keine detailliertere Beschreibung erfolgt.

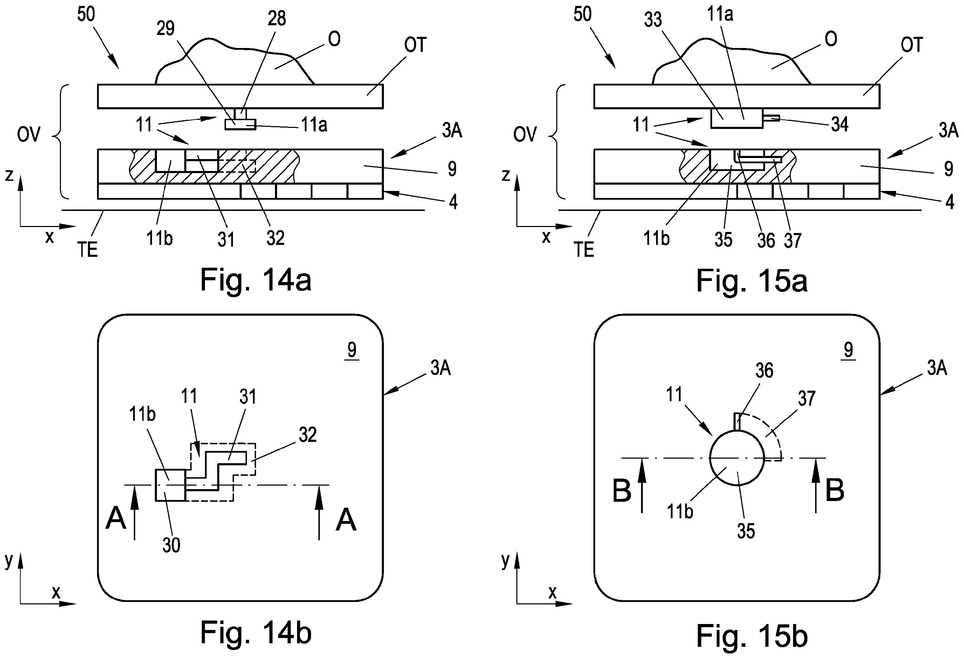

Erfindungsgemäß sind in der Transporteinrichtung 1 zumindest eine Transporteinheit 3A und zumindest eine Kopplungseinheit 50 vorgesehen, wobei an der Transporteinheit 3A und an der Kopplungseinheit 50 jeweils zumindest eine Kopplungsvorrichtung 11 zur lösbaren Kopplung der Transporteinheit 3A mit der Kopplungseinheit 50 angeordnet ist. Die Transporteinheit 3A und die Kopplungseinheit 50 sind durch eine Relativbewegung in der Transportebene TE mittels der Kopplungsvorrichtungen 11 zumindest zeitweise zu einem Verbund koppelbar, wobei die Kopplungsvorrichtungen 11 im gekoppelten Verbund zusammenwirken, um eine Relativbewegung zwischen der Transporteinheit 3A und der Kopplungseinheit 50 in zumindest einem Bewegungsfreiheitsgrad zu begrenzen. Gemäß einer ersten Alternative der Erfindung kann die zumindest eine Kopplungseinheit 50 dabei eine weitere Transporteinheit 3B sein, wobei die zumindest zwei Transporteinheiten 3A, 3B mittels der Kopplungsvorrichtungen 11 zu einem Transporteinheitsverbund TV koppelbar sind. Die Transporteinheiten 3A, 3B sind im gekoppelten Zustand gemeinsam in der Transportebene TE bewegbar. Gemäß einer zweiten Alternative der Erfindung kann die zumindest eine Kopplungseinheit 50 ein Objektträger OT zur Aufnahme eines Objekts O sein, wobei die Transporteinheit 3A mit dem Objektträger OT zu einem Objektträgerverbund OV koppelbar ist, in welchem der Objektträger OT mittels der Transporteinheit 3A in der Transportebene TE bewegbar ist. Die erste Alternative wird nachfolgend anhand der Fig.1a bis Fig.13 näher erläutert. Die zweite Alternative wird anhand der Fig.14a bis Fig.17b näher erläutert.

Im Beispiel gemäß Fig.1a+1b sind zumindest zwei Transporteinheiten 3 vorgesehen, hier die Transporteinheiten 3A, 3B, an denen jeweils zumindest eine Kopplungsvorrichtung 11 zur lösbaren und vorzugsweisen unmittelbaren Kopplung der Transporteinheiten 3A, 3B angeordnet ist. Mittels der Kopplungsvorrichtungen 11 können die Transporteinheiten 3A, 3B zumindest zeitweise zu einem Transporteinheitsverbund TV gekoppelt werden, wie in Fig.1a dargestellt ist. Dabei wird ein Transporteinheitsverbund TV gesteuert von der Planarmotor-Steuerungseinheit 5 als ein Teil in der Transportebene TE bewegt. Dadurch können sehr flexible Produktionsprozesse mit der Transporteinrichtung 1 ermöglicht werden. Beispielsweise könnte ein Transporteinheitsverbund TV dazu genutzt werden, um eine im Vergleich zu einer einzelnen Transporteinheit 3A, 3B höhere Antriebs- und Schwebekraft zu erzeugen.

Das kann z.B. dazu genutzt werden, um relativ schwere Objekte mit dem Transporteinheitsverbund TV zu transportieren, die mit einer einzelnen Transporteinheit 3A, 3B unter Umständen nicht oder nur unzureichend bewegt werden könnten. Wenn das Objekt z.B. nur an einer Transporteinheit 3A angeordnet ist, könnte eine (oder mehrere) gekoppelte Transporteinheit(en) 3B, 3C, etc. die Transporteinheit 3A (die das Objekt trägt) beispielsweise während Beschleunigungsphasen unterstützen. Ein Transporteinheitsverbund TV könnte aber auch dazu genutzt werden, um die Fläche für ein zu transportierendes Objekt zu vergrößern. Im Transporteinheitsverbund TV könnte es unter gewissen Randbedingungen (abhängig von der Masse der Transporteinheiten 3, der Masse der transportierten Objekte, der Anzahl an gekoppelten Transporteinheiten 3) zu einer Energieeinsparung kommen, weil mit einer Transporteinheiten 3 (oder mehreren), eine weitere Transporteinheit 3 (oder mehrere) bewegt werden kann. Unter Kopplung ist im Rahmen der Erfindung zu verstehen, dass eine Relativbewegung zwischen den gekoppelten Transporteinheiten 3A, 3B in zumindest zwei Bewegungsfreiheitsgraden begrenzt ist. Unter lösbar ist hierbei zu verstehen, dass die Kopplung/Entkopplung durch die Bewegungssteuerung der Transporteinheiten 3 erfolgen kann, was z.B. über die Planarmotor-Steuerungseinheit 5 der Transporteinrichtung 1 oder über eine übergeordnete Steuerungseinheit erfolgen kann.

Im gezeigten Beispiel in Fig.1a+1b weisen die Transporteinheiten 3A, 3B jeweils einen Grundkörper 9 mit einer im Wesentlichen rechteckigen Grundfläche auf. An jeder der vier Seitenflächen des Grundkörpers 9 ist eine Kopplungsvorrichtung 11 angeordnet. Die Kopplungsvorrichtung 11 sind hier nur schematisch angedeutet und sind vorteilhafterweise untereinander kompatibel ausgeführt. Das bedeutet allgemein, dass jede Kopplungsvorrichtung 11 einer Transporteinheit 3 vorzugsweise mit jeder Kopplungsvorrichtung 11 einer anderen Transporteinheit 3 koppelbar ist. Dazu sind die Kopplungsvorrichtungen 11 vorzugsweise standarisiert ausgeführt und auf jeder Transporteinheiten 3 identisch, um beliebige Transporteinheiten 3 miteinander koppeln zu können. Natürlich könnten aber an verschiedenen Transporteinheiten 3 auch verschiedene Typen von Kopplungsvorrichtungen 11 vorgesehen werden, die nicht kompatibel sind. Das könnte z.B. dann der Fall sein, wenn gewünscht ist, dass nur bestimmte Transporteinheiten 3 gekoppelt werden sollen und andere Transporteinheiten 3 nicht gekoppelt werden sollen.

Die Kopplungsvorrichtungen 11 sind dazu ausgebildet, die Relativbewegung der gekoppelten Transporteinheiten 3A, 3B im Transporteinheitsverbund TV in zumindest einem Bewegungsfreiheitsgrad, vorzugsweise in zumindest zwei Bewegungsfreiheitsgraden zu begrenzen. Im dargestellten Beispiel in Fig.1a könnten die gekoppelten Kopplungsvorrichtungen 11 des Transporteinheitsverbunds TV beispielsweise so ausgeführt sein, dass nur der translatorische Bewegungsfreiheitsgrad in X-Richtung blockiert wird und weiterhin eine (zumindest eingeschränkte) Relativbewegung zwischen den Transporteinheiten 3A, 3B in den restlichen fünf Bewegungsfreiheitsgraden Richtung möglich ist (zwei translatorische Bewegungsfreiheitsgraden in Y- und Z-Richtung und drei rotatorische Bewegungsfreiheitsgrade um die drei Achsen X, Y, Z).

Zur Kopplung können die Transporteinheiten 3A, 3B beispielsweise von der Planarmotor-Steuerungseinheit 5 in Längsrichtung X (oder einer beliebigen anderen Richtung) aufeinander zu bewegt werden, wie durch die Pfeile in Fig.1b angedeutet ist und bei Kontakt mittels der Kopplungsvorrichtungen 11 lösbar gekoppelt werden. Natürlich könnte auch eine der Transporteinheiten 3A, 3B stillstehen und nur die jeweils andere Transporteinheit 3A, 3B wird in Richtung der stillstehenden Transporteinheit 3A, 3B bewegt, um die Kopplung durchzuführen. Die Kopplung könnte z.B. durch die Bewegung der Transporteinheiten 3A, 3B selbst erfolgen (z.B. aufgrund der Massenträgheit der Transporteinheiten 3A, 3B und/oder durch Erzeugung entsprechender Antriebskräfte auf die Transporteinheiten 3A, 3B). Die Kopplungsvorrichtungen 11 sind in Fig.1a+1b nur schematisch angedeutet und können vielfältig ausgestaltet sein, vorzugsweise formschlüssig oder kraftschlüssig, wie in den nachfolgenden Beispielen noch ausführlich erläutert wird.

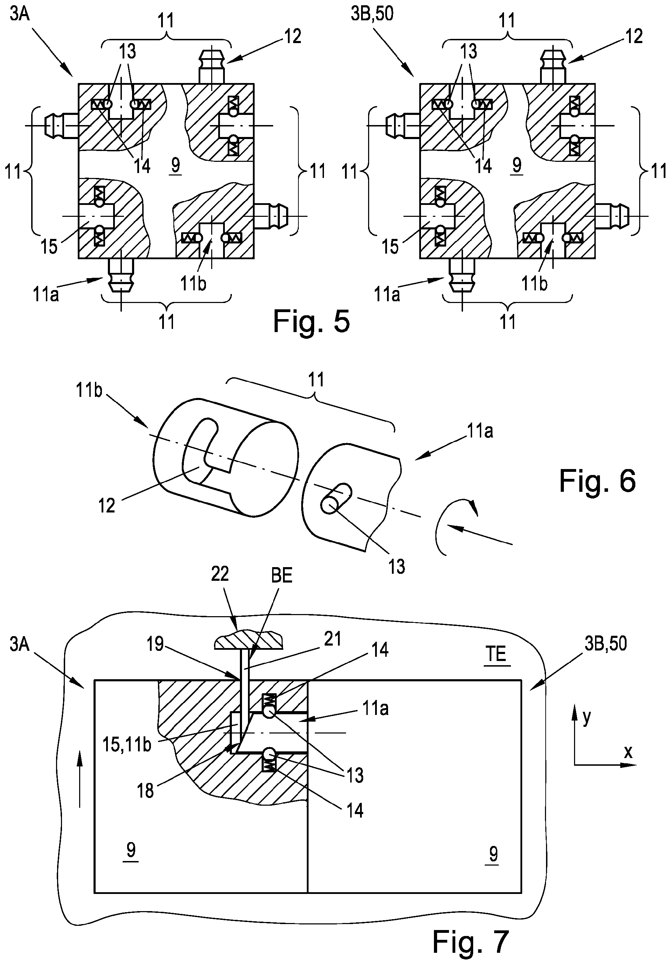

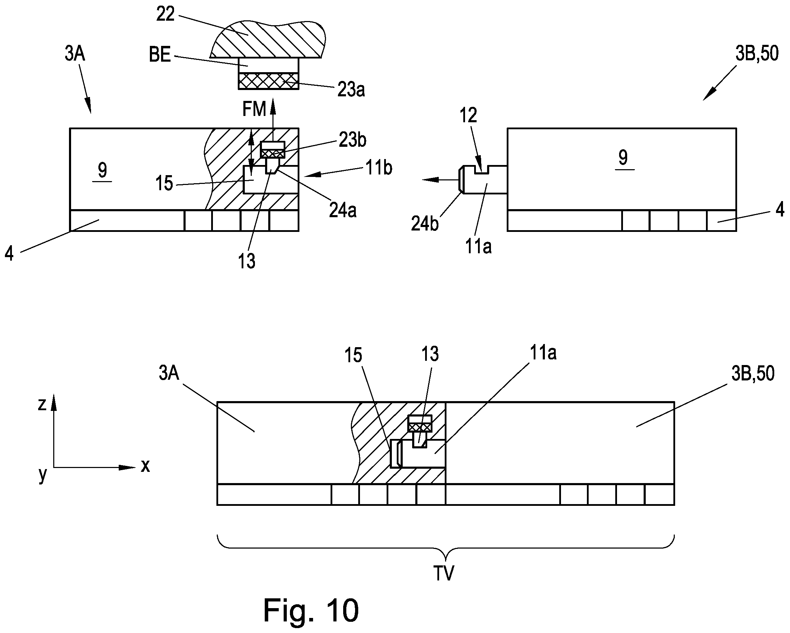

Weiters könnte an den Transporteinheiten 3A, 3B jeweils zumindest ein Teil einer (in Fig.1a+1b nicht dargestellte) aktiv oder passiv betätigbaren Sperrvorrichtung vorgesehen sein, mittels der die Relativbewegung der Transporteinheiten 3A, 3B im gekoppelten Zustand in einem zusätzlichen Bewegungsfreiheitsgrad eingeschränkt werden kann. Dadurch kann z.B. ein unerwünschtes Lösen verhindert werden. Eine passive Sperrvorrichtung kann durch eine Relativbewegung der zu koppelnden Transporteinheiten 3A, 3B betätigt werden. Unter einer Relativbewegung ist in diesem Zusammenhang eine Relativbewegung in einem Bewegungsfreiheitsgrad zu verstehen oder auch eine Abfolge von Relativbewegungen in verschiedenen Bewegungsfreiheitsgraden (z.B. Translation und Rotation sequentiell). Zur aktiven Betätigung der Sperrvorrichtung (Sperren und/oder Entsperren) kann beispielsweise an zumindest einer der Transporteinheiten 3A, 3B eine geeignete (nicht dargestellte) Betätigungseinheit vorgesehen sein. Die Sperrvorrichtung könnte aber beispielsweise auch durch eine externe Betätigungseinheit betätigt werden. Beispielsweise könnte eine externe ortsfeste Betätigungseinheit in der Transporteinrichtung 1 vorgesehen sein, die beispielsweise am Transportsegment TSi angeordnet sein könnte, wie nachfolgend anhand Fig.7 noch näher erläutert wird. Für den Fall einer aktiv betätigbaren Sperrvorrichtung kann die Betätigungseinheit beispielsweise ein geeigneter elektrischer Aktuator oder ein geeigneter Permanentmagnet oder Elektromagnet sein. Für den Fall einer passiv betätigbaren Sperrvorrichtung könnte ein geeignetes Vorspannelement wie z.B. ein Federspeicher vorgesehen sein, der die Betätigungsenergie für die Sperrvorrichtung aufbringt, wie anhand Fig.5 noch näher erläutert wird. Bei einer aktiv betätigbaren Sperrvorrichtung kann die Energieversorgung der an der Transporteinheit 3A, 3B angeordneten Betätigungseinheit z.B. über einen an der jeweiligen Transporteinheit 3 angeordneten elektrischen Energiespeicher erfolgen oder induktiv über die Antriebsspulen 6 des Stators 2 zur Verfügung gestellt werden. Weiters könnte die Sperrvorrichtung durch Gravitation betätigt werden, wie anhand von Fig. 10 noch näher erläutert wird.

Nach der Kopplung kann der Transporteinheitsverbund TV in herkömmlicher Weise in der Transportebene TE bewegt werden, analog wie die einzelnen Transporteinheiten 3A, 3B. Die Bewegungssteuerung des Transporteinheitsverbunds TV erfolgt weiterhin über die Planarmotor-Steuerungseinheit 5 oder über die übergeordnete Steuerungseinheit. Je nach konstruktiver Ausführung der Kopplungsvorrichtungen 11 kann es beim Transporteinheitsverbund TV auch ausreichend sein, wenn nur die Antriebsmagnete 4 einer der zumindest zwei Transporteinheiten 3A oder 3B mit den Antriebsspulen 6 des Stators 2 zusammenwirken. Die jeweils andere Transporteinheit 3A oder 3B wird dann im Wesentlichen geschleppt. Bei einem Transporteinheitsverbund TV können auch nur Teile der Antriebsmagnete 4 einer der gekoppelten Transporteinheiten 3A, 3B mit den Antriebsspulen 6 des Stators 2 zusammenwirken. Dies bietet vor allem Vorteile für die Momentenbildung, beispielsweise um eine ungleichmäßige Beladung des Transporteinheitsverbunds TV zu kompensieren.

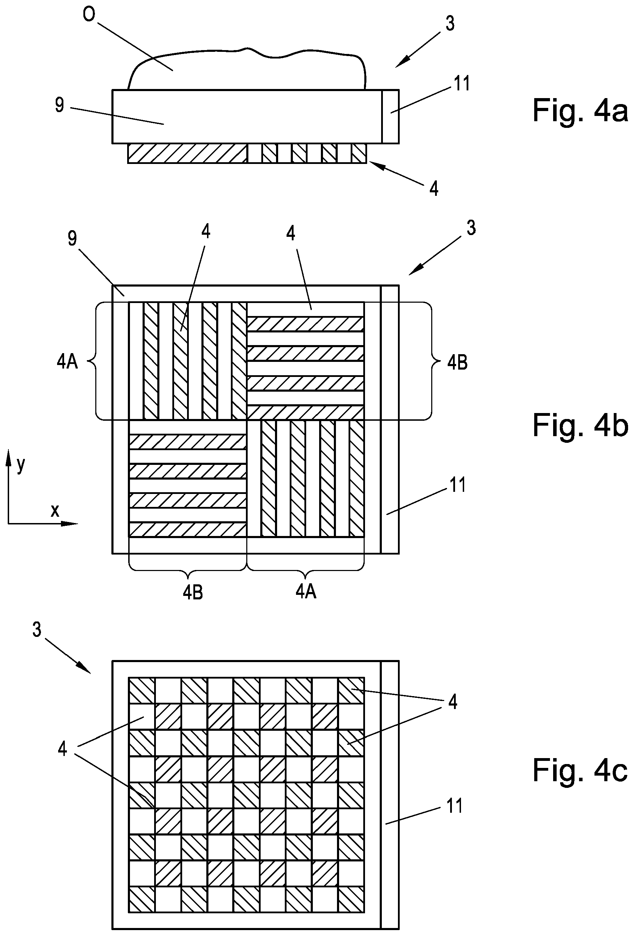

Wenn eine höhere Antriebskraft erforderlich ist, beispielsweise beim Transport relativ schwerer Objekte und/oder auf einer geneigten Transportebene TE können natürlich die Antriebsmagnete 4 beider Transporteinheiten 3A, 3B des Transporteinheitsverbunds TV zur Erzeugung der Antriebskraft mit den Antriebsspulen 6 des Stators 2 zusammenwirken. Die Entkopplung des Transporteinheitsverbunds TV könnte wiederum durch die Bewegung der Transporteinheiten 3A, 3B selbst erfolgen (z.B. durch Erzeugung einer entgegengesetzt wirkenden Antriebskraft auf die Transporteinheiten 3A, 3B). Auch die Unterstützung des Lösevorgangs durch eine Lösekraft wäre denkbar. Beispielsweise könnte eine geeignete Lösevorrichtung wie z.B. eine Lösefeder oder einen elektrischen Aktuator vorgesehen werden, oder die Lösekraft könnte auch magnetisch aufgebracht werden. Die konstruktive Ausführung der Kopplungsvorrichtungen 11 kann vielfältig ausgestaltet sein, denkbar wäre z.B. eine mechanische Kopplungsvorrichtung 11, beispielsweise form- oder kraftschlüssig, eine magnetische Kopplungsvorrichtung 11 oder auch eine beliebige Kombination der angeführten Möglichkeiten. Mögliche konkrete Ausführungsbeispiele werden nachfolgend anhand Fig.4 bis Fig.11c noch im Detail erläutert.

In Fig.2 ist eine alternative Anordnung von Antriebsspulen 6 auf einem Transportsegment TSi eines Stators 2 dargestellt. Das Transportsegment TSi ist so angeordnet, dass die Antriebsspulen 6 im Betrieb den Antriebsmagneten 4 der Transporteinheiten 3 zugewandt sind, um die Transportebene TE auszubilden. Das Transportsegment TSi weist hier eine im Wesentlichen quadratische Grundfläche auf, natürlich sind aber auch beliebige andere Formen möglich. Um eine zweidimensionale Bewegung der Transporteinheiten 3 in der Transportebene TE zu ermöglichen, sind die Antriebsspulen 6 hier in Spulengruppen 6a, 6b unterteilt, die abwechselnd in der gleichen Ebene nebeneinander angeordnet sind. Die Spulengruppen 6A, 6B sind also in Z-Richtung gleich weit von der Oberfläche des Stators 2 bzw. den Antriebsmagneten 4 der Transporteinheiten 3 beabstandet. Die Spulengruppen 6A, 6B weisen jeweils eine bestimmte Anzahl von Antriebsspulen 6 auf, wobei sich die Ausrichtung der Antriebsspulen 6 der Spulengruppen 6A, 6B unterscheidet. Im gezeigten Beispiel sind jeweils vier Antriebsspulen 6 je Spulengruppe 6A, 6B vorgesehen und die Antriebsspulen 6 der Spulengruppen 6A, 6B sind um 90 Grad zueinander gedreht. Natürlich wären aber auch andere Anordnungen, Gruppierungen und Größenverhältnisse möglich, wie z.B. die bereits genannte Fischgrätanordnung der Antriebsspulen 6. Vorzugsweise wird dabei eine bekannte 2D-Halbach-Anordnung der Antriebsmagnete 4 an der Transporteinheit 3 vorgesehen, bei der die Magnetisierungsrichtung benachbarter Antriebsmagnete 4 (=Permanentmagnete) jeweils um 90° um die Längsachse der Antriebsmagnete 4 relativ zueinander gekippt ist.

Beispielsweise können auch bei der Variante gemäß Fig.2 mehrere Schichten von Antriebsspulen 6 in Z-Richtung vorgesehen sein, wobei sich die Spulengruppen 6A, 6B dabei in Z-Richtung vorteilhafterweise abwechseln. Dadurch könnte ein im Wesentlichen durchgängiges bewegtes Magnetfeld in den Achsrichtungen Y und X erzeugt werden. Wie die Variante in Fig.1a+1b erlaubt die Anordnung der Antriebsspulen 6 gemäß Fig.2 ein zweidimensionales Bewegungsprofil der Transporteinheiten 3 in der Transportebene TE, hier mit Koordinaten in X und Y. Auch eine Rotation von Transporteinheiten 3 um eine Achse normal auf die Transportebene TEi ist möglich (hier um die Z-Achse).

In Fig.3a+3b ist eine alternative Ausgestaltung eines Transportsegments TSi dargestellt, wobei statt den Antriebsspulen 6 bewegliche Permanentmagnete PM an dem/den Transportsegmenten TSi vorgesehen sind. Fig.3a zeigt das Transportsegment TSi in einer Draufsicht, wobei ein Teil einer Deckfläche (die im Betrieb den Transporteinheiten 3 zugewandt ist) aufgebrochen dargestellt ist. Fig.3b zeigt das Transportsegment TSi in einer Seitenansicht. Um ein zeitlich veränderliches (bewegtes) Magnetfeld zu erzeugen, können die Permanentmagnete PM von der Steuerungseinheit 5 angesteuert werden, sodass diese in bestimmter Weisebewegt werden. In Fig.3a ist schematisch eine beispielhafte Anordnung von beweglichen Permanentmagneten PM am Transportsegment TSi dargestellt. Die Permanentmagnete PM sind hier zylindrisch ausgeführt und weisen jeweils einen magnetischen Nordpol und Südpol auf, wie durch sie schraffierten Flächen angedeutet ist.

Die Beweglichkeit ist hier dadurch gegeben, dass die Permanentmagnete PM jeweils um eine Rotationsachse RA drehbar sind, wie in Fig. 3a + 3b durch die Pfeile angedeutet ist. Die Rotationsachsen RA entsprechen hier jeweils der Zylinderachse der Permanentmagnete PM. Die Rotationsachsen RA stehen hier normal auf die Transportebene TE, verlaufen also in Z-Richtung. Jedem Permanentmagnet PM ist im gezeigten Beispiel eine Antriebseinheit AE zum Antrieb des jeweiligen Permanentmagneten PM zugeordnet, beispielsweise ein Elektromotor. Das ist aber natürlich nur beispielhaft und es könnten auch jeweils Gruppen von mehreren Permanentmagneten PM mittels einer Antriebseinheit AE angesteuert werden. Die Antriebseinheiten AE können von der Steuerungseinheit 5 mit einem elektrischen Strom/einer elektrischen Spannung versorgt werden, um die Permanentmagnete PM in eine gewünschte Drehbewegung zu versetzen. Durch eine zeitlich versetzte Rotation der Permanentmagnete PM kann ein gewünschtes zeitlich veränderliches, also bewegtes Magnetfeld in eine bestimmte Richtung erzeugt werden, das mit dem von den Antriebsmagneten 4 der Transporteinheiten 3 erzeugten Magnetfeld zusammenwirkt, um eine Antriebskraft sowie eine Schwebekraft auf die Transporteinheit 3 auszuüben. Dies ist aber lediglich beispielhaft zu verstehen und es könnten auch Permanentmagnete PM mit einer anderen Rotationsachse, z.B. X- oder Y-Achse vorgesehen sein. Allgemein können die beweglichen Permanentmagnete PM im Wesentlichen über das gesamte Transportsegment TSi verteilt angeordnet sein oder sich auch nur über einen Teil des Transportsegments TSi erstrecken, beispielsweise wenn nicht an jeder Stelle der Transportebene TE eine Antriebs-/Schwebekraft erzeugt werden soll.

In Fig.4a ist eine Transporteinheit 3 in einer Seitenansicht dargestellt, Fig.4b zeigt die Transporteinheit 3 in einer Ansicht von unten auf die Antriebsmagnete 4. Fig.4c zeigt eine alternative Anordnung der Antriebsmagnete 4. Die Transporteinheit 3 weist einen Grundkörper 9 mit einer im Wesentlichen rechteckigen Grundfläche auf. An der Unterseite, die im Betrieb der Transportebene TE des Stators 2 zugewandt ist, sind in bekannter Weise Antriebsmagnete 4 angeordnet. Auf der gegenüberliegenden Oberseite des Grundkörpers 9 kann beispielsweise ein zu transportierendes Objekt O angeordnet werden. Man unterscheidet grundsätzlich zwischen einer sogenannten 1D-Anordnung (Fig.4b) und einer 2D-Anordnung (Fig.4c). Ähnlich wie die Antriebsspulen 6 am Transportsegment TSi sind auch die Antriebsmagnete 4 hier in Magnetgruppen 4A, 4B aufgeteilt. In jeder Magnetgruppe 4A, 4B ist eine bestimmte Anzahl von Antriebsmagneten 4 vorgesehen, wobei sich Antriebsmagnete 4 unterschiedlicher magnetischer Polung bzw. Magnetisierungsrichtung abwechseln, wie in Fig.4b durch die schraffierten und nicht schraffierten Antriebsmagnete 4 angedeutet ist. Die Antriebsmagnete 4 einer Magnetgruppen 4A sind geometrisch anders orientiert als die Antriebsmagnete 4 der jeweils anderen Magnetgruppen 4B.

Als vorteilhaft hat sich auch die bekannte Halbach-Anordnung erwiesen, bei der die Magnetisierungsrichtung angrenzender Antriebsmagnete 4 jeweils um 90° zueinander gedreht ist. Allgemein können die Magnetisierungsrichtungen benachbarter Antriebsmagnete 4 innerhalb einer Magnetgruppe 4A, 4B aber auch um einen anderen Winkel zueinander gedreht sein, beispielsweise 45°. Die Halbach-Anordnung hat den Vorteil, dass der magnetische Fluss auf einer Seite der Magnetgruppe 4A, 4B (vorzugsweise die der Transportebene TE zugewandte Seite) größer ist als auf der gegenüberliegenden Seite. Ein besonders vorteilhaftes, sinusförmiges magnetisches Feldbild des Magnetfeldes einer Magnetgruppe 4A, 4B kann erreicht werden, wenn die jeweils äußersten Antriebsmagnete 4 der Magnetgruppe 4A, 4B eine verringerte, insbesondere die halbe Magnetbreite aufweisen, als die dazwischenliegenden Antriebsmagnete 4 der Magnetgruppe 4A, 4B.

Im dargestellten Beispiel in Fig.4b stehen die Antriebsmagnete 4 benachbarter Magnetgruppen 4A, 4B in einem Winkel von 90 Grad zueinander. Die Magnetgruppen 4B können z.B. für eine Bewegung der Transporteinheit 3 in Y-Richtung vorgesehen sein. Dazu können die Magnetgruppen 4B mit den Antriebsspulen 6y der Ausgestaltung gemäß Fig.1a+1b zusammenwirken oder mit den Spulengruppen 6B der Ausgestaltung gemäß Fig.2. Die Magnetgruppen 4A können in analoger Weise für eine Bewegung der Transporteinheit 3 in X-Richtung vorgesehene sein. Dazu können die Magnetgruppen 4A mit den Antriebsspulen 6x der Ausgestaltung gemäß Fig.1a+1b zusammenwirken oder mit den Spulengruppen 6A der Ausgestaltung gemäß Fig.2. Wenn die Transporteinheit 3 um 90 Grad gedreht wird, können aber die Magnetgruppen 4B auch mit den Antriebsspulen 6x bzw. Spulengruppen 6A zur Bewegung in X-Richtung zusammenwirken und die Magnetgruppen 4A mit den Antriebsspulen 6y bzw. Spulengruppen 6B zur Bewegung in Y-Richtung.

Bei der 2D-Anordnung (Fig.4c) sind einzelne Antriebsmagnete 4 unterschiedlicher Polung bzw. Magnetisierungrichtung schachbrettartig angeordnet, wie durch die unterschiedliche Schraffur angedeutet ist. Natürlich sind die dargestellten 1D- und 2D-Anordnungen aber nur beispielhaft zu verstehen und es ist unmittelbar ersichtlich, dass es eine Vielzahl von verschiedenen Möglichkeiten der 1D- und 2D-Anordnungen geben kann. Auch die quadratische Form des Grundkörpers 9 der dargestellten Transporteinheit 3 ist nur beispielhaft zu verstehen und es wären auch andere Formen denkbar. Beispielsweise könnte auch eine Transporteinheit 3 mit einem Grundkörper 9 mit einer runden Grundfläche vorgesehen sein. Die Antriebsmagnete 4 könnten dann ringförmig angeordnet werden, wobei sich wiederum vorzugsweise Magnetgruppen 4A, 4B in Umfangsrichtung abwechseln.

An dieser Stelle sei erwähnt, dass die anhand von Fig.1a-Fig.4c dargestellten Ausführungsformen der Transporteinrichtung 1 natürlich nur beispielhaft und nicht einschränkend zu verstehen sind. Wie eingangs erwähnt wurde, kann die Transporteinrichtung 1 insbesondere auch einen im Wesentlichen umgekehrten Aufbau aufweisen, der natürlich ebenfalls von der Erfindung umfasst ist. Das bedeutet, dass das zeitlich veränderliche Magnetfeld beispielsweise auch an den Transporteinheiten 3 erzeugt werden kann und an den Transportsegmenten TSi des Stators 2 ein zeitlich unveränderliches Magnetfeld erzeugt wird. Die Antriebsspulen 6 oder die beweglichen Permanentmagnete PM können dazu an den Transporteinheiten 3 vorgesehen sein und an den Transportsegmenten TSi des Stators 2 können die Antriebsmagnete 4 angeordnet sein. Zur Bewegung der Transporteinheiten 3 würden dann die Antriebsspulen 6 oder die beweglichen Permanentmagnete PM entsprechend angesteuert werden. Dazu könnte beispielsweise an den Transporteinheiten 3 jeweils eine separate Steuerungseinheit angeordnet sein. Die Energieversorgung der Steuerungseinheiten und der Antriebsspulen 6 bzw. der beweglichen Permanentmagnete PM könnte z.B. über einen geeigneten Energiespeicher erfolgen.

In Fig.5 sind zwei Transporteinheiten 3A, 3B in einer Draufsicht von oben schematisch dargestellt. Die Transporteinheiten 3A, 3B sind hier identisch ausgestaltet und weisen jeweils einen Grundkörper 9 mit einer im Wesentlichen quadratischen Grundfläche auf. Auf jeder der vier Seiten der Transporteinheiten 3A, 3B ist eine Kopplungsvorrichtung 11 vorgesehen. Die Kopplungsvorrichtungen 11 sind hier rein mechanisch ausgeführt und so ausgestaltet, dass eine Relativbewegung zwischen den gekoppelten Transporteinheiten 3A, 3B im Transporteinheitsverbund TV (siehe Fig.1a) in allen sechs Bewegungsfreiheitsgraden begrenzt bzw. gesperrt ist. Transporteinheiten 3A, 3B können also im Wesentlichen unmittelbar starr miteinander gekoppelt werden, sodass sich der resultierende Transporteinheitsverbund TV im Wesentlichen wie eine einzige Transporteinheit doppelter Größe verhält. Die Kopplungsvorrichtungen 11 weisen hier jeweils ein Koppelelement 11a und eine Aufnahmeeinheit 11b auf, die in einem bestimmten Abstand voneinander beabstandet an den Seitenflächen des Grundkörpers 9 angeordnet sind. Je nachdem wie starr die Kopplung sein soll und wie viele Bewegungsfreiheitsgrade begrenzt werden sollen, könnten natürlich auch mehr oder weniger Koppelelemente 11a und Aufnahmeeinheiten 11b vorgesehen werden.

Die Koppelelementen 11a sind hier als zylindrische Bolzen ausgeführt und als Aufnahmeeinheiten 11b sind korrespondierende zylindrische Koppelöffnungen 15 vorgesehen. Als Sperrvorrichtung sind hier mittels Vorspannelementen 14 vorgespannte Klemmelemente 13 in den Koppelöffnungen 15 und Klemmöffnungen 12 in den Koppelelementen 11a vorgesehen, wobei die Klemmelemente 13 zum Sperren in korrespondierenden Klemmöffnungen 12 einrasten. Dies ist natürlich nur beispielhaft zu verstehen und es könnten viele andere bekannte Sperrvorrichtungen vorgesehen werden. Die Betätigung der Sperrvorrichtung kann hier passiv durch die Relativbewegung der Transporteinheiten 3A, 3B erfolgen. Die Vorspannelemente 14 sind hier als Feder ausgebildet und spannen die Klemmelemente 13 in Richtung der Achse der zylindrischen Koppelöffnung 15 vor. Im gezeigten Beispiel ist an jedem Klemmelement 11a jeweils eine Klemmöffnung 12 in Form einer umlaufenden Nut vorgesehen. Natürlich könnten auch mehrere und/oder andere Formen von Klemmöffnungen 12 vorgesehen werden. Die Klemmelemente 13 sind hier beispielsweise in Form von gegenüberliegenden Kugeln ausgebildet. Natürlich wäre auch die umgekehrte Variante möglich, also ein oder mehrere Klemmelemente 13 an den Koppelelementen 11a und ein oder mehrere Klemmöffnungen 12 in den Koppelöffnungen 15. Auch eine Mischvariante wäre denkbar mit Klemmöffnung 12 und Klemmelement 13 sowohl an den Koppelelementen 11a, als auch in den Koppelöffnungen 15.

Zur Kopplung der beiden Transporteinheiten 3A, 3B können diese in einer Transportebene TE relativ zueinander bewegt werden, sodass die Koppelelement 11a einer Transporteinheit 3A in die korrespondierenden Koppelöffnungen 15 der jeweils anderen Transporteinheit 3B eingreifen. Dabei werden im gezeigten Beispiel die Klemmelemente 13 entgegen der Vorspannkraft der Vorspannelemente 14 vom Koppelelement 11a radial nach außen gedrückt. Wenn eine entsprechende Position erreicht ist, rasten die Klemmelemente 13, hier die Kugeln, in den Klemmöffnungen 12, hier die umlaufenden Nuten, ein, (die zusammen die Sperrvorrichtung bilden) wodurch der Koppelvorgang und zugleich das Sperren abgeschlossen sind. Die beiden Transporteinheiten 3A, 3B sind nun unmittelbar miteinander zu einem Transporteinheitsverbund TV gekoppelt. Durch die korrespondierenden Klemmelemente 13 und Klemmöffnungen 12 (die zusammen die Sperrvorrichtung bilden) ist der translatorische Bewegungsfreiheitsgrad in X-Richtung zumindest so lange gesperrt, solange die entgegengesetzte Kraftwirkung auf die Klemmelemente 13 (z.B.: Antriebs- oder Trägheitskräfte) in X-Richtung unterhalb einer bestimmten Lösekraft liegt. Ein Lösen der Sperrvorrichtung kann beispielsweise dadurch erfolgen, dass ausreichend große entgegengesetzte Kräfte, z.B. durch Erzeugung von Antriebskräften auf die Transporteinheiten 3A, 3B, ausgeübt werden, um die Klemmelemente 13 entgegen der Vorspannkraft der Vorspannelemente 14 wieder aus den Klemmöffnungen 12 zu lösen.

Es könnte aber beispielsweise auch eine geeignete (in Fig.5 nicht dargestellte) Betätigungseinheit an den Transporteinheiten 3A, 3B vorgesehen sein, um die Sperrvorrichtung zum Sperren und/oder Lösen zu betätigen. Natürlich muss ein Transporteinheitsverbund TV auch nicht zwingend während des Betriebs der Transporteinrichtung 1 durch Bewegung der Transporteinheiten 3A, 3B hergestellt werden. Die Transporteinheiten 3A, 3B könnten beispielsweise auch außerhalb der Transporteinrichtung 1 z.B. manuell durch eine Person zu einem Transporteinheitsverbund TV gekoppelt werden und dann auf die Transportebene TE des Stators 2 platziert werden. Analog kann natürlich auch bei der Entkopplung vorgegangen werden. Um eine möglichst flexible Prozessführung der Transporteinrichtung 1 zu ermöglichen, ist es allerdings vorteilhaft, wenn die Kopplung/Entkopplung automatisiert während des Betriebs erfolgen kann.

Als Sperrvorrichtung könnte beispielsweise auch ein bekannter Bajonettverschluss vorgesehen sein, wie in Fig.6 schematisch dargestellt ist. Dabei ist an der Aufnahmeeinheit 11b der Kopplungsvorrichtung 11 eine L-förmige Klemmöffnung 12 vorgesehen und am korrespondierenden Koppelelement 11a ist ein radial abstehendes Klemmelement 13 vorgesehen. Zum Koppeln der Kopplungsvorrichtung 11 ist zuerst eine axiale Relativbewegung der Transporteinheiten 3A, 3B erforderlich, wie durch den geraden Pfeil angedeutet ist. Nach der Kopplung kann das Sperren der Kopplungsvorrichtung 11 durch die Sperrvorrichtung erfolgen, indem eine relative Verdrehung zwischen Koppelelement 11a und Aufnahmeeinheit 11b erfolgt, wie durch den gebogenen Pfeil angedeutet ist. Dabei ist es unerheblich, ob nur das Koppelelement 11a, nur die Aufnahmeeinheit 11b oder beide verdreht werden. Zur Betätigung der Sperrvorrichtung kann beispielsweise eine geeignete Betätigungseinheit an zumindest einer der beiden Transporteinheiten 3A, 3B vorgesehen sein. Zusätzlich oder alternativ könnte zur Betätigung oder zur Unterstützung der Betätigung beispielsweise auch ein geeignetes (nicht dargestelltes) Vorspannelement vorgesehen sein. Ein Koppeln und Sperren von zwei Transporteinheiten 3A, 3B mittels eines Bajonettverschlusses könnte aber grundsätzlich auch durch eine Abfolge von Relativbewegungen zwischen den Transporteinheiten 3A, 3B erfolgen, beispielsweise indem zumindest eine Transporteinheit 3A, 3B vor der Kopplung zunächst eine rotative Relativbewegung um die X- oder Y-Achse relativ zur jeweils anderen Transporteinheit 3A, 3B durchführt, sodass das Klemmelement 13 und die Klemmöffnung 12 fluchten. Danach erfolgt eine translatorische Relativbewegung der Transporteinheiten 3A, 3B (z.B. in X-Richtung), sodass das Klemmelement 13 in den axialen Abschnitt der L-förmigen Klemmöffnung 12 eingeführt wird. Wenn das Klemmelement 13 mit dem in Umfangsrichtung verlaufenden Abschnitt der L-förmigen Klemmöffnung 12 fluchtet, erfolgt schließlich eine rotative Relativbewegung zurück in die Ausgangslage, wodurch der Koppel- und der Sperrvorgang abgeschlossen sind. Ein Lösen der Sperrvorrichtung und Entkoppeln der Kopplungsvorrichtung 11 erfolgt durch Umkehrung des Vorgangs. Dadurch kann in einfacher Weise und ohne Fremdenergie ein formschlüssiges Koppeln und Sperren erfolgen, wodurch es auch bei relativ hohen axialen Kräften nicht zu einem unerwünschten Lösen des Transporteinheitsverbunds TV kommt.

Wie bereits erwähnt können an einer oder an mehreren Transporteinheiten 3 auch ein oder mehrere (nicht dargestellter) Aktuatoren angeordnet sein. Beispielsweise könnte ein elektrischer Aktuator als Betätigungseinheit vorgesehen sein, um die Sperrvorrichtung zu betätigen. Dadurch könnten im Vergleich zur in Fig.5 gezeigten rein mechanischen Kopplungsvorrichtung 11 beispielsweise die für den Kopplungsvorgang erforderlichen Kräfte verringert werden. Die Energieversorgung des Aktuators (oder mehrerer Aktuatoren) könnte dabei über einen an der jeweiligen Transporteinheit 3 angeordneten Energiespeicher, z.B. eine Batterie, erfolgen. Denkbar wäre aber auch eine induktive Energieübertragung vom Stator 2 an den Aktuator, wodurch auf einen separaten Energiespeicher verzichtet werden könnte.

Als Aktuator zur Betätigung der Betätigungseinheit könnte aber beispielsweise auch eine Magnetgruppen 4A, 4B der Transporteinheit 3 verwendet werden. Dazu könnte z.B. zumindest eine der Magnetgruppen 4A, 4B (oder eine nicht dargestellte zusätzliche Magnetgruppe) relativ zu den anderen Magnetgruppen beweglich an der Transporteinheit 3 angeordnet sein. Denkbar wäre z.B. eine relativ zu den anderen Magnetgruppen linear verschiebbare oder drehbare Magnetgruppe. Die bewegliche Magnetgruppe ist dabei in geeigneter Weise mit der Betätigungseinheit verbunden, um die zum Betätigen der jeweiligen Sperrvorrichtung erforderliche Bewegung auszuführen und die nötigen Betätigungskräfte und/oder-momente zu erzeugen. Durch eine entsprechende Ansteuerung der Antriebsspulen 6 könnte folglich eine Relativbewegung zwischen der beweglichen Magnetgruppe und den anderen (fixen) Magnetgruppen erzeugt werden, über welche die Betätigungseinheit betätigt werden kann. Der oder die Aktuatoren könnten alternativ oder zusätzlich zur Betätigung der Sperrvorrichtung aber auch noch weitere Funktionen erfüllen. Beispielsweise könnte an einer Transporteinheit 3 eine (nicht dargestellte) Manipulationseinheit für ein zu transportierendes Objekt vorgesehen sein. Als Manipulationseinheit könnte beispielsweise eine Spannvorrichtung zum Fixieren des Objekts an der Transporteinheit 3 und/oder eine Drehvorrichtung zum Drehen des Objekts relativ zur Transporteinheit 3 und/oder eine Hebevorrichtung zum Anheben des Objekts, etc. vorgesehen sein.

Der Antrieb der Manipulationseinheit könnte dann wiederum von einem oder mehreren Aktuatoren erfolgen. Damit kann die Flexibilität der Transporteinrichtung 1 noch weiter erhöht werden, beispielsweise könnten Objekte mittels der Manipulationseinheit von einer Transporteinheit 3 an eine andere Transporteinheit 3 übergeben werden. Objekte könnten beispielsweise auch mittels der Manipulationseinheit von einer Transporteinheit 3 an eine in der Transporteinrichtung 1 vorgesehene Arbeitsstation übergeben werden, in welcher ein bestimmter Arbeitsschritt eines Produktionsprozesses erfolgt, z.B. eine Reinigung, Montage oder Bearbeitung des Objekts. Das Objekt könnte aber z.B. auch mittels der Manipulationseinheit von einer Transportposition in eine Arbeitsposition innerhalb der Arbeitsstation gebracht werden, ohne das Objekt zu übergeben. Das Objekt könnte dann von der Transporteinheit 3 in gewünschter Weise innerhalb der Arbeitsstation bewegt werden, um einen bestimmten Arbeitsprozess durchzuführen.

Fig.7 zeigt eine Draufsicht von oben auf zwei Transporteinheiten 3A, 3B, die zu einem Transporteinheitsverbund TV gekoppelt sind. Die Transporteinheiten 3A, 3B weisen jeweils einen Grundkörper 9 auf. Die Kopplungsvorrichtung 11 der linken Transporteinheit 3A weist eine Aufnahmeeinheit 11b auf und die Kopplungsvorrichtung 11 der rechten Transporteinheit 3B weist ein Koppelelement 11a auf. Das Koppelelement 11a kann z.B. wiederum als zylindrische Bolzen ausgeführt sein und die Aufnahmeeinheit 11b kann als korrespondierende zylindrische Koppelöffnung 15 ausgeführt sein (analog wie in Fig.5). Als Sperrvorrichtung sind hier wiederum Klemmelemente 13 in den Koppelöffnungen 15 und damit zusammenwirkende Klemmöffnungen 12 in den Koppelelementen 11a vorgesehen, wobei die Klemmelemente 13 zum Sperren der Kopplungsvorrichtungen 11 in korrespondierenden Klemmöffnungen 12 einrasten.

Die Kopplung der Transporteinheiten 3A, 3B kann hier analog wie im Beispiel gemäß Fig.5 durch eine Relativbewegung erfolgen. Das Sperren der Kopplungsvorrichtungen 11 im gekoppelten Zustand erfolgt auch hier durch Relativbewegung, indem die Klemmelemente 13 in die korrespondierenden Klemmöffnungen 12 einrasten. Zum Lösen der Sperrvorrichtung ist hier eine externe Betätigungseinheit vorgesehen. Die externe Betätigungseinheit kann, so wie dargestellt, an einer ortsfesten Struktur 22 der Transporteinrichtung 1 angeordnet sein. Die ortsfeste Struktur 22 kann dabei beispielsweise ein Teil des Transportsegments TSi sein. Die externe Betätigungseinheit könnte aber natürlich auch einer (nicht dargestellten) dritten Transporteinheit angeordnet sein. An der linken Transporteinheit 3A ist in dieser Ausführungsform eine Betätigungsöffnung 19 vorgesehen, welche die Koppelöffnung 15 mit einer Seitenfläche des Grundkörpers 9 der Transporteinheit 3A verbindet. Am freien Ende des Koppelelements 11a ist eine schräge erste Betätigungsfläche 18a vorgesehen, die in einem bestimmten Winkel um die Hochachse (hier die Z-Achse) geneigt ist und die im gekoppelten Zustand der Betätigungsöffnung 19 zugewandt ist. Die Betätigungseinheit weist hier einen zylindrischen Betätigungsstab 21 auf, der in die Betätigungsöffnung 19 der linken Transporteinheit 3A eingeführt werden kann, um mit der Betätigungsfläche 18 des Koppelelements 11a der rechten Transporteinheit 3B zum Lösen der Sperrvorrichtung zusammenzuwirken. Am freien Ende des Betätigungsstabs 21 kann dazu eine, zur ersten Betätigungsfläche 18a komplementäre, schräge zweite Betätigungsfläche 18b vorgesehen sein, die den Lösevorgang zu erleichtert.

Um die Sperrvorrichtung zu lösen kann der Transporteinheitsverbund TV in der Transportebene TE relativ zur Betätigungseinheit bewegt werden, sodass der Betätigungsstab 21 mit der Betätigungsöffnung 19 fluchtet. Danach kann der Transporteinheitsverbund TV in Richtung der Betätigungseinheit bewegt werden (hier in Y-Richtung), sodass der Betätigungsstab 21 auf die erste Betätigungsfläche 18a des Koppelelements 11a drückt, wodurch die Klemmelemente 13 entgegen der Kraft der Vorspannelemente 14 aus den damit zusammenwirkenden Klemmöffnungen 12 in den Koppelelementen 11a gedrückt werden. Damit ist die Sperrvorrichtung gelöst und die die Transporteinheiten 3A, 3B können aus dem Transporteinheitsverbund TV entkoppelt werden. Natürlich könnte auch ein manuelles Lösen der Sperrvorrichtung erfolgen, indem die erste Betätigungsfläche 18a des Koppelelements 11a z.B. mit einem geeigneten Werkzeug durch die Betätigungsöffnung 19 betätigt wird.

Die Kopplung mehrerer Transporteinheiten 3 zu einem Transporteinheitsverbund TV kann besonders vorteilhaft auch dazu genutzt werden, um in einer Arbeitsstation wirkende Prozesskräfte, beispielsweise extern wirkende Prozesskräfte eines Arbeitsprozesses aufzunehmen. Dazu kann beispielsweise zuerst der Transporteinheitsverbund TV aus einer bestimmten Anzahl von (zumindest zwei) Transporteinheiten 3 gebildet werden, beispielsweise außerhalb der Arbeitsstation (z.B. in der Transportebene TE oder manuell). Danach kann der Transporteinheitsverbund TV in der Transportebene TE in den Bereich der Arbeitsstation bewegt werden, in der ein bestimmter Arbeitsprozess durchgeführt wird, bei dem Prozesskräfte auf den Transporteinheitsverbund TV wirken. Nach Beendigung des Arbeitsprozesses kann der Transporteinheitsverbund TV aus dem Bereich der Arbeitsstation bewegt werden und wieder in die einzelnen Transporteinheiten 3 entkoppelt werden. Wenn der Transporteinheitsverbund TV aus mehr als zwei Transporteinheiten 3 gebildet ist, können natürlich auch nur eine (oder mehrere) Transporteinheiten 3 entkoppelt werden und die restlichen Transporteinheiten 3 können weiter als kleinerer Transporteinheitsverbund TV bewegt werden. Durch die Bildung eines Transporteinheitsverbunds TV im Bereich einer Arbeitsstation können größere Prozesskräfte aufgenommen werden, da mehr Antriebsmagnete 4 zur Verfügung stehen, als dies bei nur einer Transporteinheit der Fall ist.

Ein weiterer Vorteil eines Transporteinheitsverbunds TV ist z.B., dass im Vergleich zu einer einzelnen Transporteinheit 3 größere Beschleunigungen erzielt werden können, weil einerseits eine größere Anzahl an Antriebsmagneten 4 zur Verfügung steht, die mit einer größeren Anzahl von Antriebsspulen 6 gleichzeitig zur Beschleunigung des Transporteinheitsverbunds TV zusammenwirken kann. Zudem können aus dem Beschleunigungsvorgang resultierende Drehmomente (Beschleunigungsmomente) besser abgestützt werden, weil der Transporteinheitsverbund TV im Vergleich zu einer einzelnen Transporteinheit 3 eine größere geometrische Ausdehnung aufweist. Beschleunigungsmomente entstehen insbesondere durch einen Abstand in Z-Richtung zwischen dem Schwerpunkt des Transporteinheitsverbunds TV und den Antriebsmagneten 4, an denen die Antriebskraft auf den Transporteinheitsverbund TV wirkt und können zumindest teilweise kompensiert werden, indem sogenannte Stellmomente über jene Antriebsspulen 6 erzeugt werden, die mit Antriebsmagneten 4 des Transporteinheitsverbunds TV zusammenwirken, die in X- und/oder Y-Richtung (je nach Bewegungsrichtung) vom Schwerpunkt des Transporteinheitsverbunds TV beabstandet sind.

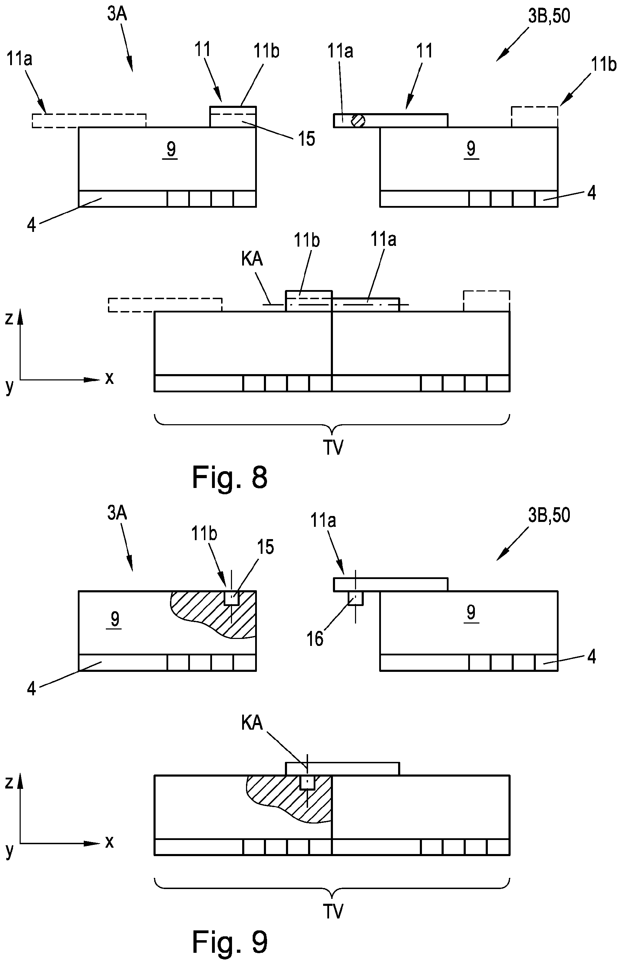

Ein weiterer Vorteil eines gekoppelten Transporteinheitsverbunds TV ist z.B., dass im Vergleich zu einem ungekoppelten Transporteinheitsverbund TV die Kräfte und Momente im gekoppelten Zustand immer über die Kopplungsvorrichtung 11 übertragen werden und nicht über das transportierte Objekt, wodurch das Objekt nicht zusätzlich belastet wird. Natürlich sind die bisher anhand Fig.5-7 beschriebenen Ausführungsformen nur beispielhaft zu verstehen und es wären auch alternative konstruktive Ausgestaltungen denkbar, aus denen der Fachmann entsprechend einer gewünschten Anwendung eine geeignete Kopplungsvorrichtung 11, Sperrvorrichtung oder Betätigungseinheit wählen kann. Das gilt natürlich in analoger Weise auch für die Ausführungsformen gemäß Fig.8-11, die nachfolgend noch näher beschrieben werden. Auch wenn die gezeigten Kopplungsvorrichtungen 11 seitlich an den Transporteinheiten 3 vorgesehen sind, ist dies natürlich nicht einschränkend zu verstehen. Geeignete Kopplungsvorrichtungen 11 können beispielsweise alternativ oder zusätzlich auf den Oberflächen der Transporteinheit 3 vorgesehen werden, beispielsweise auf der, den Antriebsmagneten 4 gegenüberliegenden Oberseite der Transporteinheit 3 und/oder auf der Unterseite. Weiters können Kopplungsvorrichtungen 11 auch Magnetelemente zur alleinigen Kopplung oder zur Unterstützung der Kopplung aufweisen. Weitere beispielhafte Ausgestaltungen werden nachfolgend anhand Fig.8-11 erläutert.

In Fig.8 sind im oberen Bereich zwei Transporteinheiten 3A, 3B dargestellt, an denen jeweils eine Kopplungsvorrichtung 11 angeordnet ist. Im unteren Bereich sind die Transporteinheiten 3A, 3B im gekoppelten Zustand als Transporteinheitsverbund TV dargestellt. Die Kopplungsvorrichtung 11 der Transporteinheit 3B weist zumindest ein Koppelelement 11a auf, das an der, den Antriebsmagneten 4 gegenüberliegenden, Oberseite des Grundkörpers 9 angeordnet ist und seitlich links über den Grundkörper 9 hinausragt. Natürlich ist dies nur beispielhaft und es könnten auch mehrere Koppelelemente 11a vorgesehen sein. Das Koppelelement 11a kann beliebig ausgeführt sein, beispielsweise als zylindrischer Bolzen, als Stab mit rechteckigem Querschnitt, etc. Die Kopplungsvorrichtung 11 der anderen Transporteinheit 3A weist hier zumindest eine Aufnahmeeinheit 11b auf, die ebenfalls an der Oberseite des Grundkörpers 9 angeordnet ist.

Das Koppelelement 11a und die Aufnahmeeinheit 11b können in beliebiger Weise mit der jeweiligen Transporteinheit 3A, 3B verbunden sein, beispielsweise geklebt, verschraubt oder könnten auch in den Grundkörper 9 der Transporteinheit 3A, 3B integriert sein. Um die Transporteinheiten 3A, 3B zum Transporteinheitsverbund TV zu koppeln, ist die Aufnahmeeinheit 11b vorgesehen, das Koppelelement 11a einer der Transporteinheit 3B aufzunehmen. Dazu kann beispielsweise eine Koppelöffnung 15 vorgesehen sein, in die das Koppelelement 11a vorzugsweise durch Relativbewegung der beiden Transporteinheiten 3A, 3B eingeführt werden kann. Sobald das Koppelelement 11a und die Koppelöffnung 15 fluchten, ist für die Kopplung hier nur eine Bewegung in X-Richtung erforderlich. Im gezeigten Beispiel ist das Koppelelement 11a als zylindrischer Bolzen ausgeführt, wie in Fig.8 durch den schraffierten Querschnitt angedeutet ist, und die Koppelöffnung 15 ist entsprechend als zylindrische Bohrung ausgeführt, die sich in X-Richtung innerhalb der Aufnahmeeinheit 11b erstreckt.

Im Transporteinheitsverbund TV ist durch die Kopplung eine Relativbewegung zwischen den beiden Transporteinheiten 3A, 3B in zumindest einem Bewegungsfreiheitsgrad begrenzt, hier in Y-Richtung. Durch die zylindrische Ausführung des Koppelelements 11a und der Koppelöffnung 15 kann allerdings auch eine gewisse rotative Relativbewegung um eine gemeinsame Koppelachse KA ermöglicht werden, die hier in X-Richtung verläuft. Natürlich könnte auch hier wiederum eine geeignete (nicht dargestellte) Sperrvorrichtung vorgesehen sein, um das Koppelelement 11a in der Aufnahmeeinheit 11b kraft- oder formschlüssig zu verriegeln. Als Sperrvorrichtung kann beispielsweise die in Fig.5 beschriebene Kombination von einem oder mehreren Klemmelement(en) 13 mit Vorspannelement(en) 14 und einer oder mehreren korrespondierenden Klemmöffnung/en 12 vorgesehen werden. Auch eine aktive Sperrvorrichtung mit einem Aktuator als Betätigungseinheit wäre natürlich denkbar. Natürlich können auch hier mehrere Kopplungsvorrichtungen 11 je Transporteinheit 3A, 3B vorgesehen sein, wie gestrichelt angedeutet ist. Jede Kopplungsvorrichtung 11 kann dabei natürlich auch mehrere Koppelelemente 11a und/oder mehrere Aufnahmeeinheiten 15 aufweisen.

In Fig.9 ist eine alternative Ausgestaltung von zusammenwirkenden Kopplungsvorrichtungen 11 dargestellt. Im oberen Bereich sind wiederum zwei getrennte Transporteinheiten 3A, 3B dargestellt und im unteren Bereich sind die Transporteinheiten 3A, 3B zu einem Transporteinheitsverbund TV gekoppelt. Als Aufnahmeeinheit 11b ist hier zumindest eine Koppelöffnung 15 direkt im Grundkörper 9 der Transporteinheit 3A vorgesehen. An der Oberseite des Grundkörpers 9 der jeweils anderen Transporteinheit 3B ist wiederum zumindest ein Koppelelement 11a angeordnet, das mit der zumindest einen Aufnahmeeinheit 11b korrespondiert. Die Form der Koppelöffnung 15 kann im Wesentlichen beliebig ausgeführt sein. Vorzugsweise wird die Form der Koppelöffnung 15 in Abhängigkeit der gewünschten Bewegungsfreiheitsgrade der Transporteinheiten 3A, 3B im gekoppelten Zustand im Transporteinheitsverbund TV gewählt.

Im dargestellten Beispiel ist die Koppelöffnung 15 als zylindrische Bohrung ausgeführt, die sich vertikal (in Z-Richtung) teilweise in den Grundkörper 9 erstreckt. An der Unterseite des Koppelelements 11a ist ein zylindrischer Vorsprung 16 vorgesehen, der sich teilweise vertikal nach unten erstreckt. Während z.B. bei der Ausführung gemäß Fig.5 und Fig.7 zur Kopplung der Transporteinheiten 3A, 3B nur eine Bewegung in der Transportebene TE (in X- und Y-Richtung) erforderlich ist, ist in der Ausführungsform gemäß Fig.9 auch eine Relativbewegung der Transporteinheiten 3A, 3B in der Hochachse normal auf die Transportebene TE des Stators 2 (hier in Z-Richtung) erforderlich. Beispielsweise kann die Transporteinheit 3A relativ zur Transporteinheit 3B in Z-Richtung abgesenkt werden (und/oder die Transporteinheit 3B relativ zur Transporteinheit 3A angehoben werden), was mittels der Planarmotor-Steuerungseinheit 5 durch Ansteuerung der entsprechenden Antriebsspulen 6 erfolgen kann.

Dadurch wird der Luftspalt zwischen den Antriebsmagneten 4 der Transporteinheit 3A und dem Stator 2 verringert und/oder der Luftspalt zwischen den Antriebsmagneten 4 der Transporteinheit 3B und dem Stator 2 erhöht. Nachdem die Transporteinheiten durch Bewegung in der Transportebene TE (in X- und Y-Richtung) so positioniert sind, dass die Kopplungsöffnung 15 der Aufnahmeeinheit 11b der Transporteinheit 3A und der Vorsprung 16 des Koppelelements 11a der Transporteinheit 3B fluchten, kann die Transporteinheit 3A wieder in Z-Richtung angehoben werden und/oder die Transporteinheit 3B abgesenkt werden, um die Kopplung abzuschließen. In ähnlicher Weise können auch Rotationen um die X-, Y- und Z-Achse zum Koppeln oder Lösen der Kopplung verwendet werden. Im gezeigten Beispiel ist die Relativbewegung der Transporteinheiten 3A, 3B in zwei translatorischen Bewegungsfreiheitsgraden (X, Y) vollständig und der dritte translatorische Bewegungsfreiheitsgrad (Z) ist teilweise begrenzt. Zudem sind zwei rotatorische Bewegungsfreiheitsgrade (um die X- und Y-Achse) vollständig begrenzt und der rotatorische Bewegungsfreiheitsgrad um die Z-Achse ist zumindest teilweise begrenzt, je nach konstruktiver Ausgestaltung der Kopplungsvorrichtung 11 und Form der Transporteinheiten 3A, 3B.

Je nach Form der Transporteinheiten 3A, 3B könnte aber eine gewisse Relativbewegung der Transporteinheiten 3A, 3B um die vertikale Koppelachse KA erfolgen, beispielsweise wenn eine oder beide Transporteinheiten 3A, 3B einen Grundkörper 9 mit runder Grundfläche aufweisen oder indem ein gewisser Abstand zwischen den beiden Grundkörpern 9 im gekoppelten Zustand vorgesehen wird (gilt natürlich auch für alle anderen Ausführungsformen). Wenn die Grundkörper 9, so wie in Fig.9 jeweils eine rechteckige Grundfläche besitzen und die Transporteinheiten 3A, 3B im gekoppelten Zustand unmittelbar aneinander anliegen, ist aber auch der rotative Bewegungsfreiheitsgrad um die Z-Achse (hier Koppelachse KA) begrenzt. Natürlich können auch in der Ausführungsform gemäß Fig.9 wiederum mehrere Kopplungsvorrichtungen 11 je Transporteinheit 3A, 3B vorgesehen sein und/oder eine Kopplungsvorrichtung 11 könnte mehrere Aufnahmeeinheiten 11b und/oder Koppelelemente 11a aufweisen.

Fig.10 zeigt eine weitere Ausführungsform von zusammenwirkenden Kopplungsvorrichtungen 11. Im oberen Bereich sind wiederum zwei getrennte Transporteinheiten 3A, 3B dargestellt und im unteren Bereich sind die Transporteinheiten 3A, 3B zu einem Transporteinheitsverbund TV gekoppelt. Als Aufnahmeeinheit 11b ist hier eine Koppelöffnung 15 direkt im Grundkörper 9 der Transporteinheit 3A vorgesehen. Seitlich am Grundkörper 9 der jeweils anderen Transporteinheit 3B ist wiederum ein Koppelelement 11a angeordnet, das mit der zumindest einen Aufnahmeeinheit 11b zur Kopplung korrespondiert. Die Koppelöffnung 15 kann z.B. als zylindrische Bohrung ausgeführt sein oder eine andere Form aufweisen, z.B. in Form einer Nut mit rechteckigem Querschnitt. Das Koppelelement 11a kann entsprechend ausgebildet sein, um mit der Koppelöffnung 15 zusammenzuwirken.

Als Sperrvorrichtung zum Sperren eines zusätzlichen Bewegungsfreiheitsgrades (hier in X-Richtung) ist im Koppelelement 11a zumindest eine Klemmöffnung 12 vorgesehen und in der Koppelöffnung 15 ist zumindest ein Klemmelement 13 vorgesehen, das mit der Klemmöffnung 12 zum Sperren der Kopplungsvorrichtung 11 zusammenwirkt. Das Klemmelement 13 ist in einer dafür vorgesehenen Öffnung in Z-Richtung verschiebbar angeordnet, wie durch den Doppelpfeil angedeutet ist. Natürlich könnten auch mehrere Klemmelemente 13 und Klemmöffnungen 12 vorgesehen sein. In dieser Ausführungsform erfolgt die Betätigung der Sperrvorrichtung zum Sperren durch die Schwerkraft und die Betätigung zum Lösen der Sperrvorrichtung erfolgt magnetisch. Dazu ist eine externe Betätigungseinheit BE vorgesehen, die beispielsweise an einer ortsfesten Struktur 22 der Transporteinrichtung 1 angeordnet sein kann, z.B. am Transportsegment TSi. Die Betätigungseinheit BE weist einen ersten Betätigungsmagneten 23a auf, der als Permanentmagnet oder als Elektromagnet ausgebildet sein kann. Am Klemmelement 13 ist ein zweiter Betätigungsmagnet 23b angeordnet, vorzugsweise ein Permanentmagnet, der mit dem ersten Betätigungsmagneten 23a zusammenwirken kann, um eine Magnetkraft auf das Klemmelement 13 in vertikaler Richtung zu erzeugen, die das Klemmelement 13 anhebt.

Zum Sperren der Sperrvorrichtung kann z.B. die Transporteinheit 3A, an der das Klemmelement 13 vorgesehen ist, zur ortsfesten Betätigungseinheit BE bewegt werden, sodass sich das Klemmelement 13 im Bereich unterhalb der Betätigungseinheit BE befindet, wie dargestellt. Die Betätigungsmagnete 23a, 23b wirken in dieser Position zusammen, um das Klemmelement 13 vertikal anzuheben und in der angehobenen Position zu halten. Die Transporteinheit 3B, an der das Koppelelement 11a angeordnet ist, kann dann relativ zur jeweils anderen Transporteinheit 3A bewegt werden, sodass die Transporteinheiten 3A, 3B zu einem Transporteinheitsverbund TV gekoppelt werden, indem das Koppelelement 11a mit der korrespondierenden Koppelöffnung 15 zusammenwirkt. Die Koppelöffnung 12 befindet sich im gekoppelten Zustand unterhalb des angehobenen Klemmelements 13. In dieser Position könnten die Transporteinheiten 3A, 3B bzw. der Transporteinheitsverbund TV beispielsweise gleichzeitig in eine Richtung bewegt werden (z.B. X- Richtung und oder Y-Richtung), um den zweiten Betätigungsmagneten 23b des Klemmelements 13 aus dem Magnetfeld des ersten (ortsfesten) Betätigungsmagneten 23a zu entfernen. Wenn keine ausreichende Magnetkraft mehr auf das Klemmelement 13 nach oben wirkt, senkt sich das Klemmelement 13 in die Klemmöffnung 12 ab und die Kopplungsvorrichtung 11 ist gesperrt. Ggf. könnte auch ein Vorspannelement in vertikaler Richtung zwischen dem Klemmelement 13 und dem Grundkörper 9 der Transporteinheit 3A angeordnet sein, um das Sperren zu beschleunigen bzw. zu unterstützen. Die Vorspankraft sollte allerdings so gewählt werden, dass sie jedenfalls durch die Magnetkraft überwunden werden kann.

Wenn der erste Betätigungsmagnet 23a der Betätigungseinheit BE als Elektromagnet ausgebildet ist, könnte der Transporteinheitsverbund TV aber beispielsweise auch im Bereich der Betätigungseinheit BE verbleiben und der Elektromagnet kann abgeschaltet werden. Dadurch wird die auf das Klemmelement 13 wirkende Magnetkraft FM aufgehoben, sodass sich das Klemmelement 13 bedingt durch die Schwerkraft (und ggf. die zusätzliche Vorspankraft) vertikal in die Klemmöffnung 12 absenkt, um die Kopplungsvorrichtung 11 zu sperren. Zum Lösen der Sperrvorrichtung könnte im Wesentlichen umgekehrt vorgegangen werden, indem der Transporteinheitsverbund TV in den Bereich der Betätigungseinheit BE bewegt wird, um das Klemmelement 13 anzuheben. Die Transporteinheit 3B, an der das Koppelelement 11a angeordnet ist könnte dann relativ zur jeweils anderen Transporteinheit 3A von der Transporteinheit 3A wegbewegt werden.

Die Betätigung der Sperrvorrichtung zum Sperren könnte grundsätzlich aber auch ohne externe Magnetkraft FM erfolgen. Beispielsweise könnten am Klemmelement 13 und/oder am Koppelelement 11a geeignete zusammenwirkende schräge Kontaktflächen vorgesehen sein. Beispielsweise könnte am Klemmelement 13 eine geeignete erste Fase 24a angeordnet sein, die der offenen Seite der Klemmöffnung 15 zugewandt ist. Am freien Ende des Koppelelements 11a könnte eine korrespondierende zweite Fase 24b vorgesehen sein. Dadurch könnte das Sperren der Sperrvorrichtung nur durch die Relativbewegung der beiden Transporteinheiten 3A, 3B erfolgen. Durch eine Relativbewegung in X-Richtung kann eine Kraft in X-Richtung erzeugt werden, mit der das Koppelelement 11a auf das Klemmelement 13 wirkt. Über die zusammenwirkenden Fasen 24a, 24b kann eine auf das Klemmelement in vertikaler Richtung wirkende Hebekraft erzeugt werden. Durch die Hebekraft kann das Klemmelement 13 bis auf die Höhe der Umfangsfläche des Koppelelements 11a angehoben werden und kann in die Klemmöffnung 12 einrasten. An der Seite des Klemmelements 13, die dem inneren Ende der Koppelöffnung 15 zugewandt ist, ist hier keine Fase vorgesehen. Das Lösen der Sperrvorrichtung kann also beispielsweise wieder über die externe Betätigungseinheit BE und die Magnetkraft FM erfolgen.

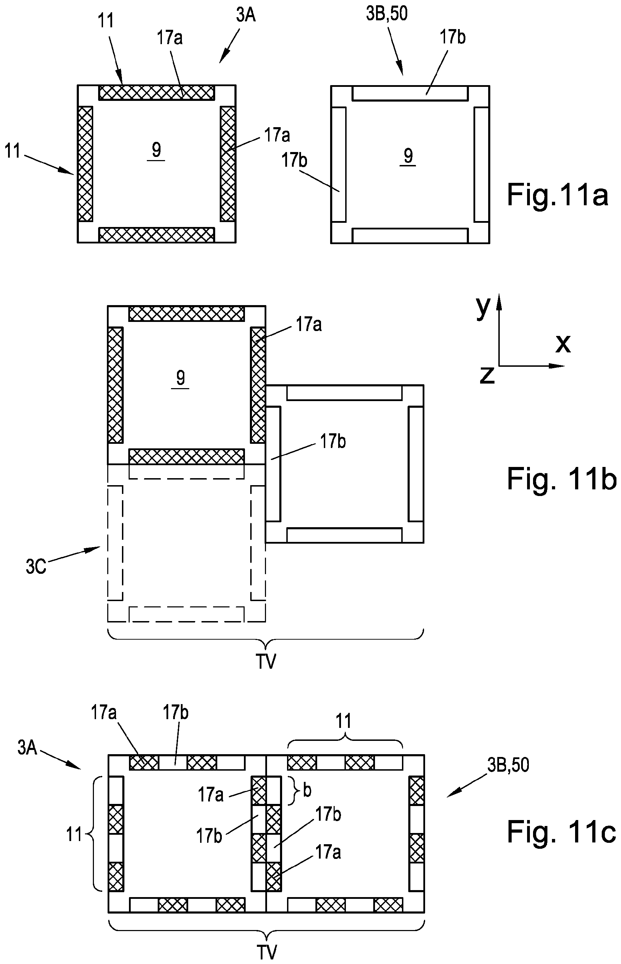

In Fig.11a - 11c ist eine weitere beispielhafte Ausgestaltung der Erfindung dargestellt. In Fig.11a sind zwei Transporteinheiten 3A, 3B in einer Draufsicht von oben dargestellt. Wie zuvor weisen die Transporteinheiten 3A, 3B wiederum jeweils einen Grundkörper 9 mit rechteckiger Grundfläche auf. An den vier Seiten der Transporteinheiten 3A, 3B sind jeweils Kopplungsvorrichtungen 11 vorgesehen. Die Kopplungsvorrichtungen 11 weisen hier Magnetelemente 17a, 17b mit unterschiedlicher Magnetisierung auf, wie durch die schraffierten und nicht schraffierten Flächen angedeutet ist. Zur Kopplung der Transporteinheiten 3A, 3B werden diese vorzugsweise relativ zueinander bewegt, bis ein ausreichend geringer Abstand zwischen den Magnetelementen 17a, 17b hergestellt ist, sodass die Magnetelemente 17a, 17b zusammenwirken. Die Magnetelemente 17a, 17b erzeugen dann eine zueinander gerichtete Anziehungskraft, wodurch die Transporteinheiten 3A, 3B rein magnetisch zu einem Transporteinheitsverbund TV gekoppelt werden. Die Kopplung erfolgt hierbei also im Wesentlichen rein kraftschlüssig durch die Magnetkraft bzw. durch die davon abhängige Reibungskraft.

In Fig.11b ist ein möglicher Transporteinheitsverbund TV dargestellt. Da in den zusammenwirkenden Kopplungsvorrichtungen 11 jeweils nur ein Magnetelement 17a, 17b vorgesehen ist, kann auch ein Transporteinheitsverbund TV1 mit einem gewissen Versatz der Transporteinheiten 3A, 3B (hier in Y-Richtung) ermöglicht werden, wobei eine im Wesentlichen stufenlose relative Positionierung in Y-Richtung möglich ist. Dadurch wäre beispielsweise auch eine Kopplung mit einer dritten Transporteinheit 3C möglich, wie gestrichelt angedeutet ist. Um den Transporteinheitsverbund TV wieder zu entkoppeln, könnten beispielsweise entgegengesetzte Antriebskräfte (hier in X-Richtung) vom Stator 2 erzeugt werden, welche die magnetische Anziehungskraft übersteigen. Eine Entkopplung wäre aber auch durch eine Scherbewegung möglich, indem die Transporteinheiten 3A, 3B tangential in Richtung entgegengesetzte Richtungen bewegt werden, hier in Y-Richtung.

In Fig.11c ist ein weiteres Beispiel eines Transporteinheitsverbunds TV aus zwei miteinander magnetisch gekoppelten Transporteinheiten 3A, 3B dargestellt. Die Kopplungsvorrichtungen 11 der Transporteinheiten 3A, 3B weisen hier jeweils mehrere nebeneinander angeordnete Magnetelemente 17a, 17b mit unterschiedlicher Magnetisierung auf. Zur Kopplung wirken jeweils die Magnetelemente 17a der Kopplungsvorrichtung 11 der Transporteinheit 3A mit den Magnetelementen 17b der Kopplungsvorrichtung 11 der anderen Transporteinheit 3B zusammen, um eine magnetische Anziehungskraft (hier in X-Richtung) zu erzeugen. Dadurch, dass sich jeweils zwei gegenüberliegende gleichartig magnetisierte Magnetelemente 17b, 17b abstoßen und gegenüberliegende unterschiedlich magnetisierte Magnetelemente 17a, 17b anziehen, kann eine Art Arretierung der Transporteinheiten 3A, 3B in einer bestimmten relativen Position zueinander erreicht werden.

Im dargestellten Beispiel sind in den Kopplungsvorrichtungen 11 der Transporteinheiten 3A, 3B jeweils vier Magnetelemente 17a, 17b jeweils abwechseln nebeneinander angeordnet. Im Transporteinheitsverbund TV wirken alle vier Magnetelemente 17a, b der Kopplungsvorrichtung 11 der linken Transporteinheit 3A mit allen vier Magnetelementen 17a, b der Kopplungsvorrichtung 11 der rechten Transporteinheit 3B zusammen. Es wäre aber auch eine versetzte Kopplung analog wie im Transporteinheitsverbund TV gemäß Fig.11b möglich. Im Unterschied zur Variante mit nur einem Magnetelement 17a, 17b je Kopplungsvorrichtung 11 (Fig.11a+11b) ist der Versatz (hier in Y-Richtung) zwischen den beiden Transporteinheiten 3A, 3B aber nicht stufenlos einstellbar.

Der Versatz ist hier im Wesentlichen von der Anzahl, der Anordnung und der Breite der Magnetelemente 17a, 17b abhängig. Im dargestellten Transporteinheitsverbund TV gemäß Fig.11c wäre beispielsweise ein Versatz um zwei Magnetbreiten b nach oben oder unten möglich. Dabei würden allerdings nur zwei Magnetelemente 17a, 17b der linken Transporteinheit 3A mit zwei Magnetelementen 17b der rechten Transporteinheit zusammenwirken und die jeweils anderen Magnetelemente 17a, 17b frei bleiben. Diese könnten natürlich wiederum für die Kopplung mit einer (nicht dargestellten) dritten Transporteinheit genutzt werden usw. Daraus ist ersichtlich, dass viele verschiedene magnetische Kopplungsvorrichtungen 11 realisiert werden können. Auch in dieser Ausführungsform kann in vorteilhafter Weise eine Scherbewegung zum Entkoppeln des Transporteinheitsverbundes TV durchgeführt werden.

Natürlich kann eine Kopplungsvorrichtung 11 auch eine Kombination aus mechanischer Kopplung und magnetischer Kopplung aufweisen. Denkbar wäre z.B., dass bei einer mechanischen Kopplungsvorrichtung 11 zusätzliche Magnetelemente zur Unterstützung des Kopplungsvorgangs vorgesehen werden. Beispielsweise könnten die Koppelelemente 11a und Aufnahmeeinheiten 11b unterschiedlich magnetisiert sein, um eine magnetische Führung zu realisieren, durch die ein leichteres Ineinandergreifen ermöglicht wird. Im Ausführungsbeispiel gemäß Fig.9 könnten z.B. der Bereich der Koppelöffnung 15 an der Transporteinheit 3A und der Vorsprung 16 des Koppelelements 11a der Transporteinheit 3B unterschiedlich magnetisiert sein. Auf eine separate Figur wird an dieser Stelle verzichtet.

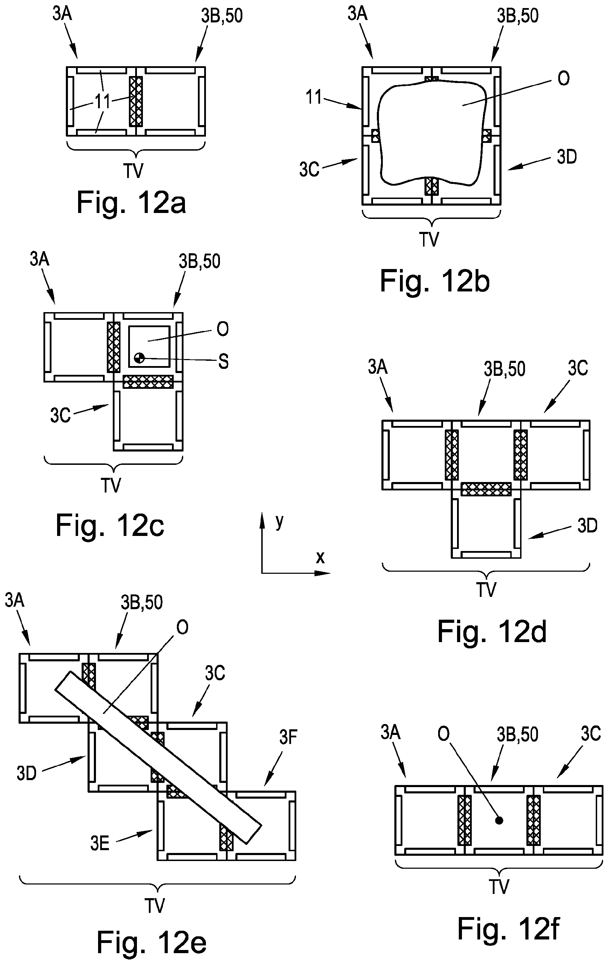

Wie bereits erwähnt, können natürlich auch mehr als zwei Transporteinheiten 3 mittels Kopplungsvorrichtungen 11 gekoppelt werden, um einen größeren Transporteinheitsverbund TV zu erhalten, wie in Fig.12a-12f dargestellt ist. In Fig.12a-12f sind jeweils mehrere Transporteinheiten 3 zu einem Transporteinheitsverbund TV gekoppelt. Die Kopplungsvorrichtungen 11 sind dabei nur schematisch angedeutet und können im Wesentlichen beliebig ausgeführt sein. Denkbar wäre beispielsweise eine rein mechanische Ausführung, eine rein magnetische Ausführung oder auch eine Mischform, wie bereits erläutert wurde. Die Kraftübertragung zwischen den Transporteinheiten 3 erfolgt dabei wiederum jeweils über die entsprechenden Kopplungsvorrichtungen 11.

In Fig.12a sind zwei Transporteinheiten 3A, 3B dargestellt, die mittels der Kopplungsvorrichtungen 11 zu einem Transporteinheitsverbund TV gekoppelt sind, analog wie bereits in Fig.1a dargestellt ist. Da an allen vier Seiten der Transporteinheiten 3A, 3B Kopplungsvorrichtungen 11 vorgesehen sind, wäre aber natürlich auch eine Kopplung mit jeder anderen Seite möglich. In Fig.12b sind vier Transporteinheiten 3A-3D mit quadratischer Grundfläche zu einem Transporteinheitsverbund TV gekoppelt, sodass sich im Wesentlichen eine einzige große quadratische Transporteinheit ergibt. Dadurch kann beispielsweise ein relativ großes Objekt O transportiert werden, das eine einzelne Transporteinheit 3A-3D in X- und Y-Richtung überragen würde, wie in Fig.12b angedeutet ist. Der Transporteinheitsverbund TV kann aber auch vorteilhaft sein, wenn relativ schwere Objekte O transportiert werden sollen, welche die maximale Trage-Kapazität einer (oder mehrerer) Transporteinheiten 3A-3D übersteigen. Der Transporteinheitsverbund TV könnte in der Transportebene TE (nicht dargestellt) beispielsweise bewegt werden, indem nur die Antriebsmagnete 4 einer der vier Transporteinheiten 3A-3D verwendet werden, um mit den Antriebsspulen 6 des Stators 2 zusammenzuwirken.

Wenn eine größere Antriebskraft erforderlich ist, können natürlich auch mehrere oder alle Antriebsmagnete 4 aller Transporteinheiten 3A-3D des Transporteinheitsverbunds TV genutzt werden. Denkbar wäre beispielsweise auch, dass im Beispiel gemäß Fig.12b nur jene Antriebsspulen 6 zur Erzeugung der Antriebskraft genutzt werden, die den im Transportverbund TV zentral aneinander angrenzenden Antriebsmagneten 4 zugeordnet sind, für einen effizienten Betrieb werden vorteilhafterweise aber alle verfügbaren Antriebsspulen 6 genutzt. Fig.12d zeigt eine alternative Möglichkeit der Kopplung von vier Transporteinheiten 3A-3D zu einem T-förmigen Transporteinheitsverbund TV. Die Fig.12c und Fig.12f zeigen zwei Varianten eines Transporteinheitsverbunds TV mit drei gekoppelten Transporteinheiten 3A-3C.

Der Transporteinheitsverbund TV in Fig.12c kann beispielsweise vorteilhaft sein, um ein Objekt O mit ungleichmäßiger Massenverteilung zu transportieren, wie durch das dargestellte Objekt O mit außermittigem Schwerpunkt S dargestellt ist. Die beiden Transporteinheiten 3A, 3C können hier zur Unterstützung mit der Transporteinheit 3B gekoppelt sein, um Momente, die sich aus dem außermittigen Schwerpunkt S ergeben besser abstützen zu können. In Fig.12f ist ein relativ kleines Objekt O mit relativ großer Masse dargestellt. Hinsichtlich der geometrischen Ausdehnung des Objekts O wäre zwar die mittlere Transporteinheit 3B ausreichend. Allerdings könnte beispielsweise die Masse des Objekts O die maximale Tragekapazität der Transporteinheit 3B übersteigen (oder einen unzulässig hohen Strom zur Ansteuerung der Antriebsspulen 6 erfordern), sodass eine Unterstützung von zwei weiteren Transporteinheiten 3A, 3B im dargestellten Transporteinheitsverbund TV vorteilhaft sein kann. In Fig.12e ist der Vollständigkeit halber noch ein Transporteinheitsverbund TV mit sechs Transporteinheiten 3A-3F dargestellt, das beispielsweise zum Transport eines langen schmalen Objekts O verwendet werden kann. Daraus ist ersichtlich, dass in naheliegender Weise auch noch viele weitere Größen und Formen eines Transporteinheitsverbunds TV gebildet werden können, wobei die konkrete Ausgestaltung des Transporteinheitsverbunds TV je nach Einsatzgebiet variieren kann.

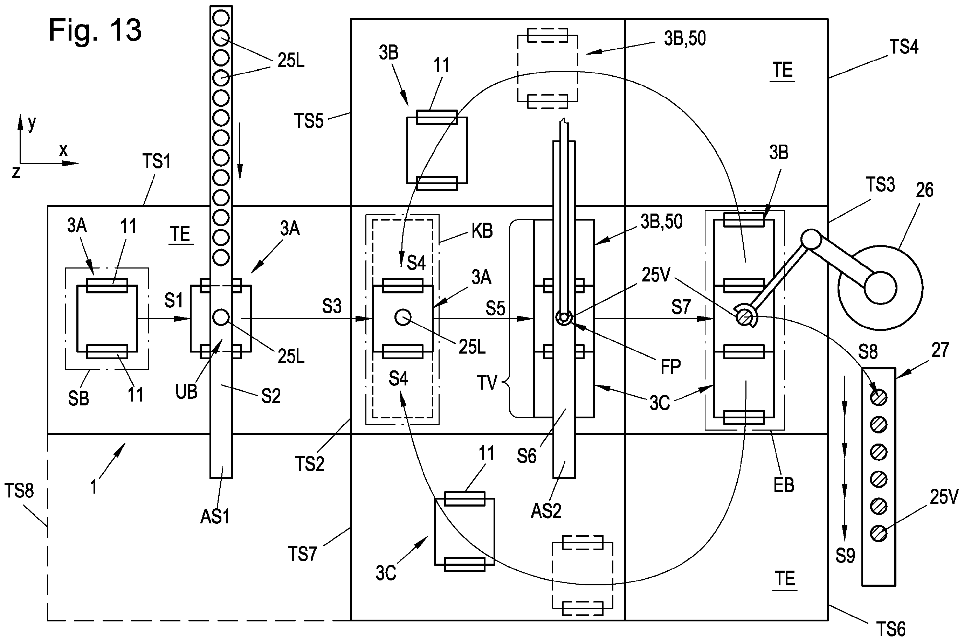

In Fig.13 ist eine Transporteinrichtung 1 dargestellt, die in einer Flaschenbefüllanlage verwendet wird, um Flaschen 25 zwischen einzelnen Arbeitsstationen ASi des Befüllprozesses zu transportieren. Natürlich ist dies nur beispielhaft zu verstehen, um die Erfindung anhand eines vorteilhaften Anwendungsgebiets zu erläutern. Die Transporteinrichtung 1 könnte natürlich auch für einen beliebig anderen Transportprozess verwendet werden. In der Transporteinrichtung 1 sind mehrere aneinander angrenzende Transportsegmente TS1-TS7 vorgesehen, die gemeinsam eine Transportebene TE ausbilden. In der Transporteinrichtung 1 sind hier drei Transporteinheiten 3A-3C vorgesehen, die in der Transportebene TE zumindest zweidimensional in X-Richtung und Y-Richtung bewegbar sind. An den Transporteinheiten 3A-3C sind hier jeweils zwei gegenüberliegende Kopplungsvorrichtungen 11 angeordnet. Die Kopplungsvorrichtungen 11 können im Wesentlichen beliebig ausgeführt sein, beispielsweise rein mechanisch, rein magnetisch oder eine Kombination, wie bereits ausführlich beschrieben wurde. Auch eine Sperrvorrichtung zum Sperren der Kopplungsvorrichtungen 11 im gekoppelten Zustand könnte natürlich vorgesehen sein.

In der Transporteinrichtung ist auch eine Steuerungseinheit zum Steuern der Bewegung der Transporteinheiten 3A-3C vorgesehen. Beispielsweise könnte auch an jedem Transportsegment TSi eine eigene Segmensteuerungseinheit zugeordnet sein, wobei die Segmensteuerungseinheiten mit einer übergeordneten Transporteinrichtungs-Steuerungseinheit kommunizieren können, um Steuerbefehle auszutauschen. Die Transporteinrichtungs-Steuerungseinheit wiederum könnte beispielsweise mit einer Anlagensteuerungseinheit der Befüllanlage verbunden sein, um den Befüllprozess und den Bewegungsprozess der Transporteinheiten 3A-3C aufeinander abzustimmen. Die Transporteinheiten 3A-3C sind in verschiedenen Stadien des Transportprozesses dargestellt, wie nachfolgen erläutert wird.

In einem ersten Schritt S1 wird eine erste Transporteinheit 3A am ersten Transportsegment TS1 von einem Startbereich SB in einen Arbeitsbereich einer ersten Arbeitsstation AS1 bewegt. Die Arbeitsstation AS1 ist hier als stationäre Übergabestation zur Übergabe von leeren Flaschen 25L an die Transporteinheit 3A ausgebildet. Die leeren Flaschen 25L können beispielsweise von einer nicht dargestellten Sammelstation bis in einen Übergabeposition UB der Übergabestation bewegt werden und in der Übergabeposition UB1 mittels einer geeigneten Manipulationseinheit an die Transporteinheit 3A übergeben werden. Die konkrete Ausgestaltung der Übergabestation ist aber nebensächlich und sie könnte z.B. als bekannter Industrieroboter, als Transporteinrichtung in Form eines Langstatorlinearmotors oder als Stetigförderer ausgebildet sein. Im dargestellten Beispiel ist die Übergabestation in Z-Richtung oberhalb der Transportebene TE angeordnet, sodass die leeren Flaschen 25L in der Übergabeposition UB1 in einem zweiten Schritt S2 von oben auf die Transporteinheit 3A abgestellt werden können. Hier wird jeweils nur eine leere Flasche 25L übergeben, natürlich könnten aber auch mehrere Flaschen 25L übergeben werden, wenn die Kapazität der Transporteinheit 3A das zulässt.

In einem dritten Schritt S3 wird die nun mit einer leeren Flasche 25L beladene erste Transporteinheit 3A auf das angrenzende zweite Transportsegment TS2 in einen Koppelbereich KB bewegt. Der Bewegungsablauf erfolgt natürlich vorzugsweise so, dass keine unzulässig hohen Beschleunigungen auftreten, die zu einem Kippen der Flasche 25L führen würden. In einem vierten Schritt S4 erfolgt im Koppelbereich KB die Kopplung der ersten Transporteinheit 3A mit einer zweiten Transporteinheit 3B und mit einer dritten Transporteinheit 3C zu einem Transporteinheitsverbund TV. Die Kopplung kann beispielsweise im Stillstand der ersten Transporteinheit 3A erfolgen, könnte aber auch während der Bewegung erfolgen, indem die Bewegungsabläufe der drei Transporteinheiten 3A-3C aufeinander abgestimmt werden. Die Kopplung muss auch nicht gleichzeitig erfolgen, sondern es könnte auch zuerst die zweite oder dritte Transporteinheit 3B, 3C mit der ersten Transporteinheit 3A gekoppelt werden und danach die jeweils andere Transporteinheit 3B, 3C. Durch die Kopplung zu einem Transporteinheitsverbund TV kann nun eine größere elektromagnetische Kraft auf den Transporteinheitsverbund TV erzeugt werden, als bei einer einzelnen Transporteinheit 3A, weil eine größere Anzahl an Antriebsmagneten 4 verfügbar ist, die damit mit einer größeren Anzahl von Antriebsspulen 6 des Planarmotors zusammenwirken können.

In einem fünften Schritt S5 wird der Transporteinheitsverbund TV in einen Arbeitsbereich der zweiten Arbeitsstation AS2 bewegt. Die Bewegung kann beispielsweise erfolgen, indem die Antriebsspulen 6 des zweiten Transportsegments TS2 angesteuert werden, um mit den Antriebsmagneten 4 aller Transporteinheiten 3A-3C zusammenzuwirken oder auch nur eines Teils der Antriebsmagnete 4. Die zweite Arbeitsstation AS2 ist hier als stationäre Befüllstation ausgebildet, in der die mit dem Transporteinheitsverbund TV transportierte leere Flasche 25L im Bereich einer Füllposition FP in einem sechsten Schritt S6 mit einer Flüssigkeit befüllt wird, wie durch die Schraffur angedeutet ist. Die Befüllstation ist hier wiederum oberhalb der Transportebene TE angeordnet. Grundsätzlich wäre es natürlich auch denkbar, dass die Befüllstation oder allgemein die Arbeitsstationen ASi beweglich ausgeführt sind, sodass ein Arbeitsprozess während der Bewegung des Transporteinheitsverbunds TV oder einer Transporteinheit 3 durchgeführt werden kann. Beispielsweise könnte im gezeigten Beispiel die Befüllstation in X-Richtung mit der gleichen Geschwindigkeit wie der Transporteinheitsverbund TV bewegt werden, sodass der Befüllvorgang während der Bewegung des Transporteinheitsverbunds TV erfolgt.

Durch die Befüllung der leeren Flache 25L erhöht sich die Masse und damit die auf den Transporteinheitsverbund TV wirkende Gewichtskraft, bestehend aus der Gewichtskraft des Transporteinheitsverbunds TV selbst + der Gewichtskraft der vollen Flasche 25V. Aufgrund des Transporteinheitsverbunds TV kann nunmehr aber eine größere Schwebekraft in Z-Richtung erzeugt werden, als bei einer einzelnen Transporteinheit 3A. Das Gewicht der vollen Flasche 25V könnte daher beispielsweise auch höher sein, als die maximale Traglast einer einzelnen Transporteinheit 3A, weil durch die gekoppelten Transporteinheiten 3B, 3C eine zusätzliche Schwebekraft erzeugt werden kann. Natürlich könnten auch andere oder zusätzliche Prozesskräfte auf den Transporteinheitsverbund TV wirken. Unter der Prozesskraft ist allgemein eine zusätzliche Belastung des Transporteinheitsverbunds TV zu verstehen, also nicht nur die Gewichtskraft, sondern auch andere Kräfte oder Momente, die in einem Arbeitsprozess auf den Transporteinheitsverbund TV wirken. Weiter kann aufgrund des Transporteinheitsverbunds TV nunmehr eine größere Antriebskraft in X- bzw. Y-Richtung erzeugt werden, als bei einer einzelnen Transporteinheit 3A. Damit können beispielsweise höhere Beschleunigungen erzielt und damit eine dynamischere Prozessführung erzielt werden.

In einem siebten Schritt S7 wird der Transporteinheitsverbund TV mit der damit transportierten vollen Flasche 25V in einen Entladebereich EB am dritten Transportsegment TS3 bewegt. Im Entladebereich EB wird die volle Flasche 25V in einem achten Schritt S8 von einer geeigneten Manipulationsvorrichtung 26, beispielsweise von einem Industrieroboter, erfasst und vom Transporteinheitsverbund TV entfernt. Der Transportprozess ist damit abgeschlossen und der Transporteinheitsverbund TV kann wieder entkoppelt werden, da die Belastung durch die volle Flasche 25V wegfällt. Die einzelnen Transporteinheiten 3A-3C können daher z.B. wieder in bestimmte Ausgangspositionen bewegt werden. Die erste Transporteinheit 3A könnte beispielsweise zurück in den Startbereich SB am ersten Transportsegment TS1 bewegt werden, während z.B. bereits ein nachfolgender Transport- und Befüllprozess durchgeführt wird. Dazu könnte beispielsweise auch ein weiteres Transportsegment TS8 vorgesehen sein, wie gestrichelt angedeutet. Die zweite Transporteinheit 3B könnte beispielsweise über das vierte und fünfte Transportsegment TS4, TS5 zurück in den Koppelbereich KB bewegt werden, um mit einer nachfolgenden ersten Transporteinheit 3A gekoppelt zu werden, wie durch den Pfeil und die gestrichelte Transporteinheit 3B symbolisiert ist. Analog könnte die dritte Transporteinheit 3C beispielsweise über das sechste und siebte Transportsegment TS6, TS7 zurück in den Koppelbereich KB bewegt werden.

Die Manipulationsvorrichtung 26 kann die vom Transporteinheitsverbund TV abgenommen vollen Flaschen 25V beispielswiese auf eine andere Transporteinrichtung 27 bewegen. Mittels der Transporteinrichtung 27 können die vollen Flaschen 25V z.B. in einen Sammelbereich oder zu einer nachfolgenden Prozessstation, beispielsweise einer Verschlussstation bewegt werden, in welcher die vollen Flaschen 25V verschlossen werden. Die Transporteinrichtung 27 kann natürlich wiederum als erfindungsgemäße Transporteinrichtung 1 ausgebildet sein oder auch als Transporteinrichtung in Form eines Langstatorlinearmotors, Stetigförderers, Industrieroboter, etc.

Nachfolgend wird anhand von Fig.14a-Fig.17b die erwähnte zweite Alternative der Erfindung näher beschrieben, gemäß der eine Transporteinheit 3A mit einem Objektträger OT (als Kopplungseinheit 50) gekoppelt werden kann. Der grundsätzliche Aufbau und die Funktion der Transporteinrichtung sind unverändert, weshalb an dieser Stelle auf eine erneute Beschreibung verzichtet wird. Der Aufbau der Transporteinrichtung kann z.B. dem Aufbau gemäß Fig.1a+1b entsprechen. Fig.14a zeigt eine Seitenansicht einer Transporteinheit 3A und eines Objektträgers OT. Fig.14b zeigt eine Draufsicht von oben auf die Transporteinheit 3A (ohne Objektträger OT). Der Schnitt A-A in Fig.14a entspricht der Schnittlinie in Fig.14b. Am Objektträger OT kann ein beliebiges Objekt O angeordnet werden, das mit der Transporteinheit 3A in der (lediglich schematisch dargestellten) Transportebene TE der Transporteinrichtung bewegt werden kann. Die Transporteinheit 3A kann z.B. einen Grundkörper 9 aufweisen, an dessen Unterseite Antriebsmagnete 4 angeordnet sind, wie anhand Fig.4a-4c bereits ausführlich beschrieben wurde. An der Transporteinheit 3A und am Objektträger OT ist jeweils zumindest eine Kopplungsvorrichtung 11 vorgesehen. Durch eine Relativbewegung zwischen der Transporteinheit 3A und dem Objektträger OT kann die Transporteinheit 3A mit dem Objektträger OT zu einem Objektträgerverbund OV gekoppelt werden. Nach der Kopplung kann der Objektträgerverbund OV in herkömmlicher Weise in der Transportebene TE bewegt werden, indem die Antriebsspulen oder die beweglichen Permanentmagnete des Stators angesteuert werden. Zur leichteren Erkennbarkeit sind der Objektträger OT und die Transporteinheit 3A in Fig.14a im nicht gekoppelten Zustand dargestellt.

Unter Relativbewegung ist im Rahmen der Erfindung eine Bewegung der Transporteinheit 3A relativ zum feststehenden Objektträger OT zu verstehen, eine Bewegung des Objektträgers OT relativ zur feststehenden Transporteinheit 3A oder eine Bewegung der Transporteinheit 3A und des Objektträgers OT relativ zueinander. Die Bewegungsmöglichkeit der Transporteinheit 3A hängt im Wesentlichen von der konstruktiven Ausgestaltung der Transporteinrichtung 1 ab, insbesondere von der Anordnung der Antriebsmagnete 4 an der Transporteinheit 3A und von der Anordnung der Antriebsspulen oder der beweglichen Permanentmagnete am Stator. Unter der Bewegung in der Transportebene TE ist allgemein eine Bewegung in zumindest zwei und bis zu sechs Bewegungsfreiheitsgraden zu verstehen. Im gezeigten Beispiel kann die Transporteinheit 3A im Wesentlichen uneingeschränkt zweidimensional in der X-Y-Ebene translatorisch bewegt werden und eingeschränkt in Z-Richtung. Um die Z-Achse ist eine im Wesentlichen uneingeschränkte rotative Bewegung möglich sowie eine eingeschränkte rotative Kippbewegung um die X-Achse und um die Y-Achse.

Beispielsweise kann der Objektträger OT lösbar an einer (nicht dargestellten) ortsfesten Halterung der Transporteinrichtung 1 gehalten sein, die an einer geeigneten Stelle angeordnet sein kann, die von der Transporteinheit 3A erreicht werden kann. Die Transporteinheit 3A kann dann in der Transportebene TE zunächst zum Objektträger OT bewegt werden. Wenn sich die Transporteinheit 3A im Bereich des Objektträgers OT befindet, kann die Kopplungsvorrichtung 11 der Transporteinheit 3A mit der Kopplungsvorrichtung 11 des Objektträgers OT in Übereinstimmung gebracht werden. Danach kann die Transporteinheit 3A rein durch die Relativbewegung mit dem Objektträger OT gekoppelt werden, wobei der Objektträger OT von der Halterung gelöst wird. Der Objektträgerverbund OV kann nunmehr durch eine entsprechende Steuerung der Transporteinheit 3A in der Transportebene TE bewegt werden, um einen gewünschten Transportprozess durchzuführen. Natürlich wäre auch die umgekehrte Variante möglich, bei der die Transporteinheit 3A stillsteht und der Objektträger OT relativ zur Transporteinheit 3A bewegt wird, beispielsweise mittels einer geeigneten Manipulationsvorrichtung wie einem Roboter. Der Kopplungsvorgang bleibt dabei aber unverändert.

Im Beispiel gemäß Fig.14a+14b weist die Kopplungsvorrichtung 11 des Objektträgers OT ein Koppelelement 11a auf und die die Kopplungsvorrichtung 11 der Transporteinheit 3A weist eine damit korrespondierende Aufnahmeeinheit 11b auf. Das Koppelelement 11a ist hier an der, der Transporteinheit 3A zugewandten, Unterseite des Objektträgers OT angeordnet und weist einen an die Unterseite angrenzenden Steg 28 und ein relativ zum Steg 28 breiteres freies Ende 29 auf. Das freie Ende 29 weist hier beispielhaft einen rechteckigen Querschnitt auf. Das freie Ende 29 und/oder der Steg 28 könnten aber beispielsweise auch jeweils zylindrisch ausgebildet sein, wobei der Steg 28 einen kleineren Durchmesser hat als das freie Ende 29. Das breitere freie Ende 29 kann als Teil einer Sperrvorrichtung im Sinne der Erfindung angesehen werden, insbesondere als Klemmelement.

Die Aufnahmeeinheit 11b ist auf der, den Antriebsmagneten 4 gegenüberliegenden Oberseite des Grundkörpers 9 der Transporteinheit 3A angeordnet. Die Aufnahmeeinheit 11b weist hier eine Aufnahmeöffnung 30 mit einem rechteckigen Querschnitt auf, die sich von der Oberseite über einen Teil des Grundkörpers 9 in Richtung der Unterseite erstreckt. Natürlich könnte aber auch die Aufnahmeöffnung 30 wiederum eine andere Form aufweisen, beispielsweise einen runden Querschnitt. An eine Seite der Aufnahmeöffnung 30 grenzt ein nach oben offener Führungskanal 31 an, der hier im Wesentlichen Z-förmig verläuft, sowie ein in Z-Richtung unterhalb des Führungskanals 31 liegender Aufnahmekanal 32. Der Führungskanal 31 und der Aufnahmekanal 32 können als Teil der Sperrvorrichtung im Sinne der Erfindung angesehen werden, insbesondere als Klemmöffnung. Die Breite des Führungskanals 31 entspricht dabei im Wesentlichen der Breite des Stegs 28 des Koppelelements 11a des Objektträgers OT oder ist geringfügig größer und die Breite des Aufnahmekanals 32 entspricht im Wesentlichen der Breite des freien Endes 29 des Koppelelements 11a des Objektträgers OT oder ist geringfügig größer.

Durch eine Relativbewegung zwischen Objektträger OT und Transporteinheit 3A können der Objektträger OT und die Transporteinheit 3A zu einem Objektträgerverbund OV gekoppelt werden. Dazu werden Objektträger OT und Transporteinheit 3A zunächst in der X-Y-Ebene so zueinander positioniert, dass das Koppelelement 11a und die Aufnahmeeinheit 11b fluchten. Danach erfolgt eine Relativbewegung in Z-Richtung, bis das Koppelelement 11a in der Aufnahmeeinheit 11b aufgenommen ist. Dadurch ist die Kopplung im Sinne der Erfindung abgeschlossen, bei der zumindest ein Freiheitsgrad der Relativbewegung zwischen Objektträger OT und Transporteinheit 3A begrenzt ist (hier zwei translatorische Freiheitsgrade in X- und Y-Richtung, sowie ein rotatorischer Freiheitsgrad um die Z-Achse). Die Sperrvorrichtung kann hier ebenfalls durch die Relativbewegung betätigt werden, hier zunächst in X-Richtung, sodass der Steg 28 des Koppelelements 11a im Führungskanal 31 und das freie Ende 29 des Koppelelements 11a in den Aufnahmekanal 32 aufgenommen sind. Dadurch ist ein weiterer Freiheitsgrad der Relativbewegung begrenzt, hier in Z-Richtung. Danach kann eine weitere Relativbewegung erfolgen, die im Wesentlichen vom Verlauf des Führungskanals 31 und des parallelen Aufnahmekanals 32 abhängt. Im dargestellten Beispiel setzt sich diese Relativbewegung entsprechend es Z-förmigen Verlaufs aus der genannten Relativbewegung in X-Richtung, einer drauffolgenden Relativbewegung in Y-Richtung und einer weiteren Relativbewegung in X-Richtung zusammen, bis sich der Steg im Bereich des geschlossenen Endes des Führungskanals 31 befindet.

Natürlich ist die dargestellte konstruktive Ausführungsform aber nur beispielhaft zu verstehen und die Komponenten könnten natürlich auch konstruktiv anders ausgebildet sein. Beispielsweise könnten das Koppelelement 11a und die Aufnahmeeinheit 11b eine andere Form aufweisen und der Führungskanal 31 und Aufnahmekanal 32 könnten einen anderen Verlauf aufweisen. Natürlich könnte die Kopplungsvorrichtung 11 des Objektträgers OT auch mehrere gleichartige Koppelelemente 11a aufweisen und die die Kopplungsvorrichtung 11 der Transporteinheit 3A könnte mehrere gleichartige Aufnahmeeinheiten 11b aufweisen. Denkbar wäre z.B. auch, dass zusätzliche (nicht dargestellte) Magnetelemente zur Unterstützung des Kopplungsvorgangs vorgesehen sind. Beispielsweise könnte das Koppelelement 11a und die Aufnahmeeinheit 11b unterschiedlich magnetisiert sein, um eine magnetische Führung zu realisieren, durch die ein leichteres Ineinandergreifen ermöglicht wird. Beispielsweise könnte auch lediglich im Bereich des Endes des Aufnahmekanals 36 ein Magnetelement vorgesehen sein, das mit dem Koppelelement 11a magnetisch zusammenwirkt, um eine Haltekraft zu erzeugen.

Das Beispiel gemäß Fig.15a+15b unterscheidet sich von der Ausführung gemäß Fig.14a+14b lediglich durch die Ausgestaltung des Koppelelements 11a der damit korrespondierenden Aufnahmeeinheit 11 b. Das Koppelelement 11 a ist hier wiederum an der, der Transporteinheit 3A zugewandten, Unterseite des Objektträgers OT angeordnet und weist einen an die Unterseite angrenzenden zylindrischen Vorsprung 33 und einen an der Umfangsfläche angeordneten radial abstehenden Zapfen 34. Der Zapfen 34 kann beispielsweise ebenfalls zylindrisch ausgebildet sein. Der Zapfen 34 ist in Z-Richtung zumindest von der Unterseite des Objektträgers OT beabstandet. Hier ist der Zapfen 34 in Z-Richtung im Wesentlichen mittig am Vorsprung 33 angeordnet, könnte aber auch weiterunten liegen. Der Zapfen 34 kann als Teil der Sperrvorrichtung im Sinne der Erfindung angesehen werden, insbesondere als Klemmelement. Die Aufnahmeeinheit 11b weist hier eine zylindrische Aufnahmeöffnung 35 auf, die sich von der Oberseite über einen Teil des Grundkörpers 9 in Richtung der Unterseite erstreckt. Der Durchmesser der Aufnahmeöffnung 35 entspricht im Wesentlichen dem Durchmesser des zylindrischen Vorsprungs 33 oder ist geringfügig größer. An eine Seite der Aufnahmeöffnung 30, hier in Y-Richtung gesehen oben, ist ein vertikaler Schlitz 36 vorgesehen, der sich radial nach außen erstreckt. Der vertikale Schlitz 36 erstreckt sich in Z-Richtung gesehen ausgehend von der der Oberseite des Grundkörpers 9 über einen Teil der Tiefe der Aufnahmeöffnung 35, wobei der Teil im Wesentlichen dem Abstand der Unterseite des Zapfens 34 von der Unterseite des Objektträgers OT entspricht. In Umfangsrichtung gesehen ist der Schlitz 36 mit einem Führungskanal 37 verbunden, der im Wesentlichen die Form eines Kreisringsektors aufweist. Der Führungskanal 37 ist in radialer Richtung mit der Aufnahmeöffnung 35 verbunden und von der Oberseite des Grundkörpers 9 beabstandet, wie in Fig.15a ersichtlich ist. Ausgehend vom Schlitz 36 erstreckt sich der Führungskanal über einen bestimmten Winkel in Umfangsrichtung, hier z.B. 90°. Der Schlitz 36 und der Führungskanal 37 bilden damit einen Teil der Sperrvorrichtung im Sinne der Erfindung aus, insbesondere die Klemmöffnung.

Wiederum können der Objektträger OT und die Transporteinheit 3A durch eine Relativbewegung gekoppelt werden. Dazu werden Objektträger OT und Transporteinheit 3A zunächst in der X-Y-Ebene so zueinander positioniert, dass das Koppelelement 11a und die Aufnahmeeinheit 11b fluchten. Im dargestellten Beispiel bedeutet das, dass der zylindrische Vorsprung 33 mit der Aufnahmeöffnung 35 fluchtet und der Zapfen 34 mit dem Schlitz 36. Danach erfolgt eine Relativbewegung in Z-Richtung, bis das Koppelelement 11a in der Aufnahmeeinheit 11b aufgenommen ist. Die Kopplung ist dadurch abgeschlossen, da zumindest ein Freiheitsgrad der Relativbewegung begrenzt ist (hier zwei translatorische Freiheitsgrade in X- und Y-Richtung, sowie ein rotatorischer Freiheitsgrad um die Z-Achse, zusätzlich sind aufgrund des zylindrischen Formschlusses natürlich auch die Rotationen um die X- und Y-Achse gesperrt). Danach kann die Sperrvorrichtung durch eine rotative Relativbewegung um die Z-Achse erfolgen, sodass der Zapfen 34 des Koppelelements 11a im Führungskanal 37 aufgenommen ist. Dadurch ist ein weiterer Freiheitsgrad der Relativbewegung begrenzt, hier in Z-Richtung. Natürlich ist auch die dargestellte konstruktive Ausführungsform in Fig.15a+b wiederum nur beispielhaft zu verstehen und die Komponenten könnten natürlich auch konstruktiv anders ausgebildet sein. Wiederum könnte auch eine magnetische Unterstützung vorgesehen sein, wie oben zu Fig.14a+b bereits erwähnt wurde.

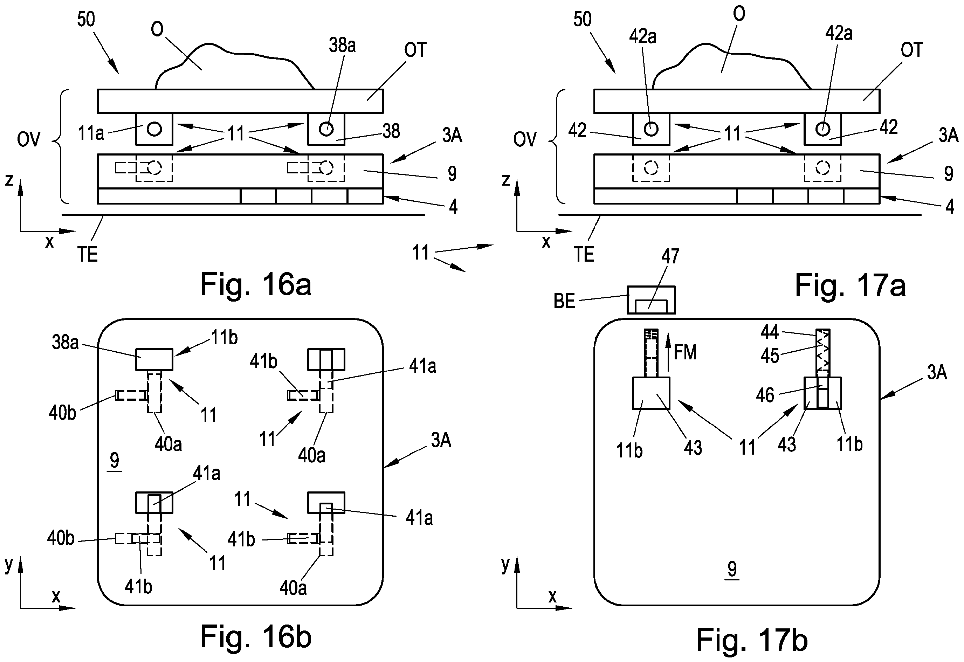

In Fig.16a+16b ist eine weitere mögliche Ausführungsform der Kopplung von Objektträger OT und Transporteinheit 3A dargestellt. Die Kopplungsvorrichtung 11 des Objektträgers OT weist hier vier Koppelelemente 11a auf, die an der Unterseite des Objektträgers OT angeordnet sind und die Transporteinheit 3A weist vier damit korrespondierende Aufnahmeeinheiten 11b an der Oberseite des Grundkörpers 9 auf. Die Koppelelemente 11a weisen jeweils einen quaderförmigen Vorsprung 38 auf und die Aufnahmeeinheiten 11b weisen quaderförmige Ausnehmungen 39 auf, deren Größe im Wesentlichen den Vorsprüngen 38 entspricht oder die geringfügig größer ist. Im dargestellten Beispiel ist in jedem der Vorsprünge 38 eine Aufnahmeöffnung 38a vorgesehen, die als Teil einer Sperrvorrichtung im Sinne der Erfindung angesehen werden kann, insbesondere als Klemmöffnung. Die Aufnahmeöffnung 38a ist hier beispielhaft als eine in Y-Richtung verlaufende zylindrische Durchgangsbohrung ausgebildet. An jeder quaderförmigen Ausnehmung 39 sind hier ein erster Sperrkanal 40a und ein zweiter Sperrkanal 40b vorgesehen. Ein Ende des ersten Sperrkanals 40a ist mit der quaderförmigen Ausnehmung 39 verbunden und das andere Ende ist geschlossen. Der erste Sperrkanal 40a verläuft (im gekoppelten Zustand) parallel zur Aufnahmeöffnung 38a des Vorsprungs 38, hier in Y-Richtung. Der zweite Sperrkanal 40b ist mit einem Ende mit dem ersten Sperrkanal 40a verbunden und das andere Ende ist geschlossen. Die Längsachsen der Sperrkanäle 40a, 40b schneiden sich und sind in einem festgelegten Winkel zueinander angeordnet, hier in 90°. Der zweite Sperrkanal 40b verläuft daher in X-Richtung. Im ersten Sperrkanal 40a ist ein erstes Sperrelement 41a angeordnet, das innerhalb des ersten Sperrkanals 40a in Richtung der Längsachse beweglich ist. Im zweiten Sperrkanal 40b ist in analoger Weise ein zweites Sperrelement 41b angeordnet, das innerhalb des zweiten Sperrkanals 40b in Richtung der Längsachse beweglich ist. Das erste Sperrelement 41a kann als Klemmelement der Sperrvorrichtung im Sinne der Erfindung angesehen werden.

Wiederum können der Objektträger OT und die Transporteinheit 3A durch eine Relativbewegung gekoppelt werden. Zunächst werden der Objektträger OT und die Transporteinheit 3A in der X-Y-Ebene so zueinander positioniert, dass die Koppelelemente 11a und die Aufnahmeeinheiten 11b fluchten. Im dargestellten Beispiel bedeutet das, dass die quaderförmigen Vorsprünge 38 mit den quaderförmigen Ausnehmungen 39 fluchten. Die ersten Sperrelemente 41a befinden sich dabei vorzugsweise vollständig innerhalb des ersten Sperrkanals 40a, wie stellvertretend für alle vier Aufnahmeeinheiten 11b in Fig.16b links oben dargestellt ist. Danach erfolgt eine Relativbewegung in Z-Richtung, bis die Vorsprünge 38 in den Ausnehmungen 39 aufgenommen sind. Der Kopplungsvorgang im Sinne der Erfindung ist dadurch abgeschlossen, da zumindest ein Freiheitsgrad der Relativbewegung begrenzt ist (hier zwei translatorische Freiheitsgrade in X- und Y-Richtung, sowie ein rotatorischer Freiheitsgrad um die Z-Achse, zusätzlich sind aufgrund des Formschlusses natürlich auch die Rotationen um die X- und Y-Achse gesperrt). Danach kann die Sperrvorrichtung wiederum durch eine Relativbewegung aktiviert werden. Hierzu sei an angemerkt, dass die Sperrelemente 41a, 41b der vier Kopplungsvorrichtungen 11 in Fig.16b in verschiedenen zeitlichen Stadien des Sperrvorgangs dargestellt sind (links oben, rechts oben, links unten und rechts unten). Zum Betätigen der Sperrvorrichtung wird der Objektträgerverbund OV zunächst um die X-Achse aus der Horizontalen gekippt, bis die ersten Sperrelemente 41a teilweise in der Aufnahmeöffnung 38a des zugehörigen Vorsprungs 38 aufgenommen sind, wie stellvertretend für alle vier Aufnahmeeinheiten 11b in Fig.16b rechts oben dargestellt ist. Die Bewegung der Sperrelemente erfolgt dabei aufgrund der Schwerkraft, können aber auch zusätzlich oder alternativ aufgrund von Massenträgheitskräften bewegt werden. Dadurch ist ein weiterer Freiheitsgrad der Relativbewegung begrenzt, hier formschlüssig in Z-Richtung. Danach kann der Objektträgerverbund OV (zusätzlich oder nachdem er in die Horizontale zurückgekippt wurde) um die Y-Achse gekippt werden, bis die zweiten Sperrelemente 41b teilweise im ersten Sperrkanal 40a aufgenommen sind, wie stellvertretend für alle vier Aufnahmeeinheiten 11b in Fig.16b links unten dargestellt ist. Die zweiten Sperrelemente 41b wirken somit als Sicherung für die ersten Sperrelemente 41a, sodass sich diese nicht in unerwünschter Weise aus den Aufnahmeöffnungen 38a herausbewegen. Das Entsperren kann in umgekehrter Reihenfolge der Bewegungsabläufe erfolgen, also zunächst Kippen um die Y-Achse, sodass die zweiten Sperrelemente 41b die ersten Sperrelemente 41a freigeben (Fig.16b - rechts unten) und danach Kippen um die X-Achse, sodass die ersten Sperrelemente 41a die Aufnahmeöffnungen 38a freigeben. Natürlich ist die dargestellte konstruktive Ausführungsform in Fig.16a+b wiederum nur beispielhaft zu verstehen und die Komponenten könnten natürlich auch konstruktiv anders ausgebildet sein. Wiederum könnte auch eine magnetische Unterstützung vorgesehen sein, wie oben zu Fig.14a+b bereits erwähnt wurde.

In Fig.17a+17b ist eine weitere mögliche Ausführungsform der Kopplung von Objektträger OT und Transporteinheit 3A dargestellt. Die Kopplungsvorrichtung 11 des Objektträgers OT weist hier beispielhaft zwei Koppelelemente 11a auf, die an der Unterseite des Objektträgers OT angeordnet sind und die Transporteinheit 3A weist zwei damit korrespondierende Aufnahmeeinheiten 11b an der Oberseite des Grundkörpers 9 auf. Analog wie im Beispiel gemäß Fig.16a weisen die Koppelelemente 11 a jeweils einen quaderförmigen Vorsprung 42 mit einer Aufnahmeöffnung 42a auf, die einen Teil einer Sperrvorrichtung ausbildet, insbesondere die Klemmöffnung. Die Aufnahmeeinheiten 11b weisen quaderförmige Ausnehmungen 43 auf, analog wie im Beispiel gemäß Fig.16b. An jeder quaderförmigen Ausnehmung 43 ist ein Sperrkanal 44 vorgesehen. Ein Ende des Sperrkanals 44 ist mit der quaderförmigen Ausnehmung 43 verbunden und das andere Ende ist vorzugsweise geschlossen. Der Sperrkanal 44 verläuft (im gekoppelten Zustand) parallel zur Aufnahmeöffnung 42a des Vorsprungs 42, hier in Y-Richtung. Im Sperrkanal 44 ist ein magnetisches Sperrelement 46 angeordnet, innerhalb des Sperrkanals in Richtung der Längsachse beweglich ist und das von einem Federelement in Richtung der Ausnehmung 43 gedrückt wird, wie in Fig.17b rechts dargestellt ist. Der Sperrkanal 44, das Sperrelement 46 und die Feder 45 bilden damit einen Teil der Sperrvorrichtung im Sinne der Erfindung aus, wobei das Sperrelement 46 insbesondere als Klemmelement im Sinne der Erfindung angesehen werden kann. Im nicht betätigten Zustand befindet sich das Sperrelement 46 im rechts dargestellten Sperrzustand. Zur Betätigung der Sperrvorrichtung ist in diesem Beispiel eine Betätigungseinheit BE erforderlich, ähnlich wie bereits anhand des Beispiels in Fig.10 erläutert wurde. Die Betätigungseinheit BE kann beispielsweise ein Teil der Transporteinrichtung 1 sein, wie in Fig.17b dargestellt, könnte aber natürlich auch ein Teil der Transporteinheit 3A sein. Im dargestellten Beispiel ist an der Betätigungseinheit BE ein magnetischer Betätigungsabschnitt 47 vorgesehen, z.B. ein Permanentmagnet oder Elektromagnet. Die Betätigungseinheit BE kann aber auch anders ausgeführt sein, beispielsweise mit einer mechanischen Betätigung.

Zur Kopplung des Objektträgers OT mit der Transporteinheit 3A kann die Transporteinheit 3A zunächst in einen Betätigungsbereich der Betätigungseinheit BE bewegt werden, in dem eine magnetische Kraft FM auf das Sperrelement 46 erzeugt wird, durch welche das Sperrelement 46 von der Sperrposition (Fig.17b - rechts) in eine Löseposition (Fig.17b - links) bewegt wird. Danach kann der Objektträger durch eine Relativbewegung mit der Transporteinheit 3A gekoppelt werden. Dabei werden der Objektträger OT und die Transporteinheit 3A in der X-Y-Ebene so zueinander positioniert, dass die Koppelelemente 11a und die Aufnahmeeinheiten 11b fluchten. Im dargestellten Beispiel bedeutet das, dass die quaderförmigen Vorsprünge 42 mit den quaderförmigen Ausnehmungen 43 fluchten. Danach erfolgt eine Relativbewegung in Z-Richtung, bis die Vorsprünge 42 in den Ausnehmungen 43 aufgenommen sind. Der Kopplungsvorgang im Sinne der Erfindung ist dadurch abgeschlossen, da zumindest ein Freiheitsgrad der Relativbewegung begrenzt ist (hier zwei translatorische Freiheitsgrade in X- und Y-Richtung, sowie ein rotatorischer Freiheitsgrad um die Z-Achse, zusätzlich sind aufgrund des Formschlusses natürlich auch die Rotationen um die X- und Y-Achse gesperrt).

Danach kann die Sperrvorrichtung betätigt werden, indem der Objektträgerverbund OV aus dem Betätigungsbereich der Betätigungseinheit bewegt wird. Aufgrund der fehlenden Magnetkraft FM wird das Sperrelement 46 vom Federelement 45 wieder in den Sperrzustand (Fig.17b - rechts) bewegt. Das Sperrelement 46 ist nun in der Aufnahmeöffnung 42a aufgenommen, wodurch ein weiterer Freiheitsgrad der Relativbewegung begrenzt ist, hier formschlüssig in Z-Richtung. Das Entsperren kann in umgekehrter Reihenfolge der Bewegungsabläufe erfolgen, also zunächst Bewegen in den Betätigungsbereich der Betätigungseinheit BE und danach Entkoppeln des Objektträgers OT von der Transporteinheit 3A. Natürlich ist die dargestellte konstruktive Ausführungsform in Fig.17a+b wiederum nur beispielhaft zu verstehen und die Komponenten könnten natürlich auch konstruktiv anders ausgebildet sein und es könnten auch mehr oder weniger Koppelelemente 11a und Aufnahmeeinheiten 11b vorgesehen sein. Ähnlich wie im Beispiel gemäß Fig.10 könnten am Sperrelement 46 und am Vorsprung 42 natürlich auch (nicht dargestellte) korrespondierende Fasen angeordnet sein, sodass das Sperrelement 46 während des Koppelvorgangs automatisch durch die Relativbewegung vom Sperrzustand in den Lösezustand verlagert wird. Die Betätigung durch Betätigungseinheit BE wäre in diesem Fall nur zum Entsperren erforderlich.

Es ist ersichtlich, dass durch die Transporteinrichtung 1 gemäß der Erfindung ein sehr flexibler Transportprozess durchgeführt werden kann, in dem beliebige Objekte in sehr flexibler Weise transportiert werden können. Durch die Kopplung von mehreren Transporteinheiten 3 zu einem Transporteinheitsverbund TV gemäß der ersten Alternative der Erfindung kann der Transportprozess in vorteilhafter Weise an die Größe und das Gewicht der transportierten Objekte angepasst werden, um einen Transportprozess mit einem gewünschten Bewegungsablauf durchführen zu können. Die Kopplung einer Transporteinheit 3 mit einem Objektträger OT gemäß der zweiten Alternative der Erfindung hat den Vorteil, dass in einfacher Weise eine Kopplung/Entkopplung einer Transporteinheit 3 mit einem Objektträger OT ermöglicht wird, sodass beispielsweise ein einfacher und rascher Austausch von verschiedenen Objektträgern OT ermöglicht wird.

## Patentansprüche

1. Transporteinheit für eine Transporteinrichtung (1) in Form eines Planarmotors mit zumindest einem Transportsegment (TSi), das eine Transportebene (TE) ausbildet, wobei an der Transporteinheit (3A) Antriebsmagnete (4) vorgesehen sind, um mit Antriebsspulen (6) oder beweglichen Permanentmagneten (PM) des Transportsegments (TSi) magnetisch zusammenzuwirken oder wobei an der Transporteinheit (3A) Antriebsspulen (6) oder bewegliche Permanentmagnete (PM) vorgesehen sind, um mit Antriebsmagneten (4) des Transportsegments (TSi) magnetisch zusammenzuwirken, um die Transporteinheit (3A) in der Transportebene (TE) zumindest zweidimensional zu bewegen, **dadurch gekennzeichnet, dass** an der Transporteinheit (3A) zumindest eine Kopplungsvorrichtung (11) vorgesehen ist, die dazu ausgebildet ist, die Transporteinheit (3A) mit einer Kopplungseinheit (50) durch eine Relativbewegung zwischen der Transporteinheit (3A) und der Kopplungseinheit (50) in der Transportebene (TE) lösbar zu einem Verbund zu koppeln, wobei die Kopplungsvorrichtung (11) dazu ausgebildet ist, im gekoppelten Verbund mit der Kopplungseinheit (50) derart zusammenzuwirken, dass eine Relativbewegung zwischen der Transporteinheit (3A) und der Kopplungseinheit (50) in zumindest einem Bewegungsfreiheitsgrad begrenzt ist, wobei die Kopplungseinheit (50) entweder eine weitere Transporteinheit (3B) ist und die zumindest zwei Transporteinheiten (3A, 3B) mittels der Kopplungsvorrichtungen (11) zu einem Transporteinheitsverbund (TV) koppelbar sind, in welchem die Transporteinheiten (3A, 3B) gemeinsam in der Transportebene (TE) bewegbar sind oder dass die eine Kopplungseinheit (50) ein Objektträger (OT) zur Aufnahme eines Objekts (O) ist und die Transporteinheit (3A) mit dem Objektträger (OT) zu einem Objektträgerverbund (OV) koppelbar ist, in welchem der Objektträger (OT) mittels der Transporteinheit (3A) in der Transportebene (TE) bewegbar ist.

2. Transporteinheit nach Anspruch 1, **dadurch gekennzeichnet, dass** die Kopplungsvorrichtung (11) formschlüssig und/oder kraftschlüssig ausgebildet ist.

3. Transporteinheit nach einem der Ansprüche 1 oder 2, **dadurch gekennzeichnet, dass** die Kopplungsvorrichtung (11) zumindest einen Teil einer Sperrvorrichtung aufweist, die dazu ausgebildet ist, eine Relativbewegung zwischen der Transporteinheit (3A) und der Kopplungseinheit (50) im Verbund in einem zusätzlichen Bewegungsfreiheitsgrad zu begrenzen.

4. Transporteinheit nach Anspruch 3, **dadurch gekennzeichnet, dass** die Sperrvorrichtung durch eine Relativbewegung zwischen der Transporteinheit (3A) und der Kopplungseinheit (50) oder durch eine externe Betätigungseinheit (BE) betätigbar ist **oder dass** an der Transporteinheit (3A) oder der Kopplungseinheit eine Betätigungseinheit (BE) zur Betätigung der Sperrvorrichtung und ein Aktuator zur Betätigung der Betätigungseinheit (BE) vorgesehen sind.

5. Transporteinheit nach einem der Ansprüche 1 bis 4, **dadurch gekennzeichnet, dass** in der Kopplungsvorrichtung (11) zumindest ein Koppelelement (11a) und/oder zumindest eine Aufnahmeeinheit (11b) vorgesehen ist, wobei ein Koppelelement (11a) dazu vorgesehen ist, zum Koppeln mit einer Aufnahmeeinheit (11b) der Kopplungseinheit (50) zusammenzuwirken.

6. Transporteinheit nach Anspruch 5, **dadurch gekennzeichnet, dass** vorzugsweise als Teil der Sperrvorrichtung an zumindest einem Koppelelement (11a) und/oder an zumindest einer Aufnahmeeinheit (11b) zumindest eine Klemmöffnung (12) und/oder zumindest ein Klemmelement (13) vorgesehen ist.

7. Transporteinheit nach einem der Ansprüche 1 bis 6, **dadurch gekennzeichnet, dass** in der Kopplungsvorrichtung (11) zumindest ein Magnetelement (17a, 17b) vorgesehen ist.

8. Transporteinrichtung (1) in Form eines Planarmotors mit zumindest einem Transportsegment (TSi), das eine Transportebene (TE) ausbildet und mit zumindest einer Transporteinheit (3A), die in der Transportebene (TE) zumindest zweidimensional bewegbar ist, wobei am Transportsegment (TSi) Antriebsspulen (6) oder bewegliche Permanentmagnete (PM) angeordnet sind und an der Transporteinheit (3A) Antriebsmagnete (4) angeordnet sind oder umgekehrt, wobei die Antriebsspulen (6) oder die beweglichen Permanentmagnete (PM) mit den Antriebsmagneten (4) magnetisch zusammenzuwirken, um die Transporteinheit (3A) in der Transportebene (TE) zumindest zweidimensional zu bewegen, **dadurch gekennzeichnet, dass** die Transporteinheit (3A) nach einem der Ansprüche 1 bis 7 ausgebildet ist, dass in der Transporteinrichtung (1) zumindest eine Kopplungseinheit (50) vorgesehen ist, an welcher zumindest eine Kopplungsvorrichtung (11) zur lösbaren Kopplung der Transporteinheit (3A) mit der Kopplungseinheit (50) angeordnet ist, dass die Transporteinheit (3A) und die Kopplungseinheit (50) durch eine Relativbewegung in der Transportebene (TE) mittels der Kopplungsvorrichtungen (11) zumindest zeitweise zu einem Verbund koppelbar sind und dass die Kopplungsvorrichtungen (11) im gekoppelten Verbund zusammenwirken, um eine Relativbewegung zwischen der Transporteinheit (3A) und der Kopplungseinheit in zumindest einem Bewegungsfreiheitsgrad zu begrenzen, wobei die zumindest eine Kopplungseinheit (50) eine weitere Transporteinheit (3B) ist und die zumindest zwei Transporteinheiten (3A, 3B) mittels der Kopplungsvorrichtungen (11) zu einem Transporteinheitsverbund (TV) koppelbar sind, in welchem die Transporteinheiten (3A, 3B) gemeinsam in der Transportebene (TE) bewegbar sind **oder dass** die zumindest eine Kopplungseinheit (50) ein Objektträger (OT) zur Aufnahme eines Objekts (O) ist und die Transporteinheit (3A) mit dem Objektträger (OT) zu einem Objektträgerverbund (OV) koppelbar ist, in welchem der Objektträger (OT) mittels der Transporteinheit (3A) in der Transportebene (TE) bewegbar ist.

9. Transporteinrichtung (1) nach Anspruch 8, **dadurch gekennzeichnet, dass** die Kopplungsvorrichtungen (11) formschlüssig und/oder kraftschlüssig ausgeführt sind und/oder dass die Kopplungsvorrichtungen (11) jeweils zumindest einen Teil einer Sperrvorrichtung aufweisen, wobei die Sperrvorrichtung dazu ausgebildet ist, eine Relativbewegung zwischen der Transporteinheit (3A) und der Kopplungseinheit (50) im Verbund in einem zusätzlichen Bewegungsfreiheitsgrad zu begrenzen.

10. Transporteinrichtung (1) nach Anspruch 9, **dadurch gekennzeichnet, dass** die Sperrvorrichtung durch eine Relativbewegung zwischen der Transporteinheit (3A) und der Kopplungseinheit (50) betätigbar ist oder dass in der Transporteinrichtung (1) eine Betätigungseinheit (BE) zur Betätigung der Sperrvorrichtung vorgesehen ist, wobeidie Betätigungseinheit (BE) vorzugsweise als ortsfeste, insbesondere mechanische oder magnetische Betätigungseinheit (BE) ausgebildet ist und/oder an der Transporteinheit (3A) oder der Kopplungseinheit (50) eine Betätigungseinheit (BE) zur Betätigung der Sperrvorrichtung und ein Aktuator zur Betätigung der Betätigungseinheit (BE) vorgesehen sind.

11. Transporteinrichtung (1) nach einem der Ansprüche 8 bis 10, **dadurch gekennzeichnet, dass** in der Kopplungsvorrichtung (11) der Transporteinheit (3A) zumindest ein Koppelelement (11a) vorgesehen ist und in der Kopplungsvorrichtung (11) der Kopplungseinheit (50) zumindest eine Aufnahmeeinheit (11b) vorgesehen ist oder umgekehrt, wobei das Koppelelement (11a) vorgesehen ist, mit der Aufnahmeeinheit (11b) zur lösbaren Kopplung der Transporteinheit (3A) mit der Kopplungseinheit (50) zusammenzuwirken, wobei vorzugsweise die Sperrvorrichtung zumindest ein Klemmelement (13) und zumindest eine damit zusammenwirkende Klemmöffnung (12) aufweist, wobei das Klemmelement (13) am Koppelelement (11a) angeordnet ist und die Klemmöffnung (12) in der Aufnahmeeinheit (11b) angeordnet ist oder umgekehrt.

12. Transporteinrichtung (1) nach einem der Ansprüche 8 bis 11, **dadurch gekennzeichnet, dass** die Kopplungsvorrichtungen (11) jeweils zumindest ein Magnetelement (17a, 17b) aufweisen, wobei die Magnetelemente (17a, 17b) vorgesehen sind, eine magnetische Anziehungskraft zwischen der Transporteinheit (3A) und der Kopplungseinheit (50) zu erzeugen.

13. Verfahren zum Betreiben einer Transporteinrichtung (1) nach einem der Ansprüche 8 bis 12, **dadurch gekennzeichnet, dass** die zumindest eine Transporteinheit (3A) in der Transportebene (TE) relativ zur Kopplungseinheit (50) bewegt wird oder umgekehrt und dass die Transporteinheit (3A) und die Kopplungseinheit (50) durch die Relativbewegung mittels der Kopplungsvorrichtungen (11) zu einem Verbund gekoppelt werden, wobei vorzugsweise die Sperrvorrichtung im gekoppelten Zustand betätigt wird.

14. Verfahren nach Anspruch 13, **dadurch gekennzeichnet, dass** als Kopplungseinheit (50) eine weitere Transporteinheit (3B) verwendet wird, dass die Transporteinheiten (3A, 3B) zu einem Transporteinheitsverbund (TV) gekoppelt werden und dass der Transporteinheitsverbund (TV) in der Transportebene (TE) bewegt wird, indem zumindest Teile der Antriebsmagnete (4) einer der zumindest zwei Transporteinheiten (3A, 3B) mit den Antriebsspulen (6) oder den beweglichen Antriebsmagneten (PM) des Transportsegments (TSi) magnetisch zusammenwirken oder indem zumindest Teile der Antriebsspulen (6) oder der beweglichen Antriebsmagnete (PM) einer der zumindest zwei Transporteinheiten (3A, 3B) mit den Antriebsmagneten (4) des Transportsegments (TSi) magnetisch zusammenwirken.

15. Verfahren nach Anspruch 14, **dadurch gekennzeichnet, dass** der Transporteinheitsverbund (TV) in eine Arbeitsstation bewegt wird, in der ein Arbeitsprozess durchgeführt wird, bei dem Prozesskräfte auf den Transporteinheitsverbund (TV) wirken und/oder der Transporteinheitsverbund (TV) mit zumindest einem Objekt beladen wird und dass der Transporteinheitsverbund (TV) nach Beendigung des Arbeitsprozesses in die zumindest zwei Transporteinheiten (3A, 3B) entkoppelt wird.

## Claims

1. Transport unit for a transport device (1) in the form of a planar motor comprising at least one transport segment (TSi), which forms a transport plane (TE), wherein drive magnets (4) are provided on the transport unit (3A) to interact magnetically with drive coils (6) or movable permanent magnets (PM) of the transport segment (TSi) or wherein drive coils (6) or movable permanent magnets (PM) are provided on the transport unit (3A) to interact magnetically with drive magnets (4) of the transport segment (TSi), to move the transport unit (3A) at least two-dimensionally in the transport plane (TE), **characterized in that** at least one coupling device (11) is provided on the transport unit (3A), which device is designed to releasably couple the transport unit (3A) to a coupling unit (50) to form an assembly by way of a relative movement between the transport unit (3A) and the coupling unit (50) in the transport plane (TE), wherein the coupling device (11) is designed to interact with the coupling unit (50) in the coupled assembly in such a way, that a relative movement between the transport unit (3A) and the coupling unit (50) is limited in at least one degree of freedom of movement, wherein the coupling unit (50) either is a further transport unit (3B) and the at least two transport units (3A, 3B) can be coupled by the coupling devices (11) to form a transport unit assembly (TV), in which the transport units (3A, 3B) can be jointly moved in the transport plane (TE), or that the coupling unit (50) is an object carrier (OT) for receiving an object (O) and the transport unit (3A) can be coupled to the object carrier (OT) to form an object carrier assembly (OV), in which the object carrier (OT) can be moved in the transport plane (TE) by the transport unit (3A).

2. Transport unit according to claim 1, **characterized in that** the coupling device (11) is designed to be form-fitting and/or force-fitting.

3. Transport unit according to either claim 1 or claim 2, **characterized in that** the coupling device (11) comprises at least a part of a blocking device, which is designed to limit a relative movement between the transport unit (3A) and the coupling unit (50) in the assembly in an additional degree of freedom of movement.

4. Transport unit according to claim 3, **characterized in that** the blocking device can be actuated by a relative movement between the transport unit (3A) and the coupling unit (50) or by an external actuating unit (BE), or **in that** an actuating unit (BE) for actuating the blocking device and an actuator for actuating the actuating unit (BE) are provided on the transport unit (3A) or the coupling unit.

5. Transport unit according to any of claims 1 to 4, **characterized in that** at least one coupling element (11a) and/or at least one receiving unit (11b) is provided in the coupling device (11), wherein a coupling element (11a) is provided to interact with a receiving unit (11b) of the coupling unit (50) for coupling.

6. Transport unit according to claim 5, **characterized in that** at least one clamping opening (12) and/or at least one clamping element (13) is preferably provided as part of the blocking device on at least one coupling element (11a) and/or on at least one receiving unit (11b).

7. Transport unit according to any of claims 1 to 6, **characterized in that** at least one magnetic element (17a, 17b) is provided in the coupling device (11).

8. Transport device (1) in the form of a planar motor comprising at least one transport segment (TSi), which forms a transport plane (TE), and at least one transport unit (3A), which can be moved at least two-dimensionally in the transport plane (TE), wherein drive coils (6) or movable permanent magnets (PM) are arranged on the transport segment (TSi) and drive magnets (4) are arranged on the transport unit (3A), or vice versa, wherein the drive coils (6) or the movable permanent magnets (PM) interact magnetically with the drive magnets (4) to move the transport unit (3A) at least two-dimensionally in the transport plane (TE), **characterized in that** the transport unit (3A) according to any of claims 1 to 7 is designed so, that at least one coupling unit (50) is provided in the transport device (1), on which unit at least one coupling device (11) for releasably coupling the transport unit (3A) to the coupling unit (50) is arranged, **in that** the transport unit (3A) and the coupling unit (50) can be coupled, at least temporarily, by the coupling devices (11) to form an assembly by way of a relative movement in the transport plane (TE), and **in that** the coupling devices (11) interact in the coupled assembly to limit a relative movement between the transport unit (3A) and the coupling unit in at least one degree of freedom of movement, wherein in the at least one coupling unit (50) being a further transport unit (3B) and wherein the at least two transport units (3A, 3B) can be coupled by the coupling devices (11) to form a transport unit assembly (TV), in which the transport units (3A, 3B) can be jointly moved in the transport plane (TE), **or in that** the at least one coupling unit (50) is an object carrier (OT) for receiving an object (O) and the transport unit (3A) can be coupled to the object carrier (OT) to form an object carrier assembly (OV), in which the object carrier (OT) can be moved in the transport plane (TE) by means of the transport unit (3A).

9. Transport device (1) according to claim 8, **characterized in that** the coupling devices (11) are designed to be form-fitting and/or force-fitting, and/or **in that** the coupling devices (11) each have at least part of a blocking device, wherein the blocking device is designed to limit a relative movement between the transport unit (3A) and the coupling unit (50) in the assembly in an additional degree of freedom of movement.

10. Transport device (1) according to claim 9, **characterized in that** the blocking device can be actuated by a relative movement between the transport unit (3A) and the coupling unit (50), or **in that** an actuating unit (BE) for actuating the blocking device is provided in the transport device (1), the actuating unit (BE) preferably being designed as a stationary, in particular as mechanical or magnetic, actuating unit (BE), and/or an actuating unit (BE) for actuating the blocking device and an actuator for actuating the actuating unit (BE) being provided on the transport unit (3A) or the coupling unit (50).

11. Transport device (1) according to any of claims 8 to 10, **characterized in that** at least one coupling element (11a) is provided in the coupling device (11) of the transport unit (3A) and at least one receiving unit (11b) is provided in the coupling device (11) of the coupling unit (50), or vice versa, the coupling element (11a) being provided to interact with the receiving unit (11b) for releasably coupling the transport unit (3A) to the coupling unit (50), the blocking device preferably comprising at least one clamping element (13) and at least one clamping opening (12) interacting therewith, the clamping element (13) being arranged on the coupling element (11a) and the clamping opening (12) being arranged in the receiving unit (11b), or vice versa.

12. Transport device (1) according to any of claims 8 to 11, **characterized in that** the coupling devices (11) each have at least one magnetic element (17a, 17b), the magnetic elements (17a, 17b) being provided to generate a magnetic force of attraction between the transport unit (3A) and the coupling unit (50).

13. Method for operating a transport device (1) according to any of claims 8 to 12, **characterized in that** the at least one transport unit (3A) is moved in the transport plane (TE) relative to the coupling unit (50), or vice versa, and **in that** the transport unit (3A) and the coupling unit (50) are coupled to form an assembly by the relative movement by the coupling devices (11), the blocking device preferably being actuated in the coupled state.

14. Method according to claim 13, **characterized in that** a further transport unit (3B) is used as the coupling unit (50), **in that** the transport units (3A, 3B) are coupled to form a transport unit assembly (TV), and **in that** the transport unit assembly (TV) is moved in the transport plane (TE) by at least a part of the drive magnets (4) of one of the at least two transport units (3A, 3B) interacting magnetically with the drive coils (6) or the movable drive magnets (PM) of the transport segment (TSi) or by at least a part of the drive coils (6) or the movable drive magnets (PM) of one of the at least two transport units (3A, 3B) interacting magnetically with the drive magnets (4) of the transport segment (TSi).

15. Method according to claim 14, **characterized in that** the transport unit assembly (TV) is moved to a work station, where a work process is carried out, in which process forces act on the transport unit assembly (TV) and/or the transport unit assembly (TV) is loaded with at least one object, and **in that** the transport unit assembly (TV) is decoupled into the at least two transport units (3A, 3B) after completion of the work process.

## Revendications

1. Unité de transport pour un appareil de transport (1) sous la forme d'un moteur planaire comportant au moins un segment de transport (TSi) qui forme un plan de transport (TE), dans laquelle, sur l'unité de transport (3A), des aimants d'entraînement (4) sont prévus afin de coopérer de manière magnétique avec des bobines d'entraînement (6) ou des aimants permanents mobiles (PM) du segment de transport (TSi) ou dans laquelle, sur l'unité de transport (3A), des bobines d'entraînement (6) ou des aimants permanents mobiles (PM) sont prévus afin de coopérer de manière magnétique avec des aimants d'entraînement (4) du segment de transport (TSi), afin de déplacer l'unité de transport (3A) dans le plan de transport (TE) au moins dans deux dimensions, **caractérisée en ce que,** sur l'unité de transport (3A), au moins un dispositif d'accouplement (11) est prévu, lequel est conçu pour accoupler de manière amovible l'unité de transport (3A) avec une unité d'accouplement (50), par l'intermédiaire d'un mouvement relatif entre l'unité de transport (3A) et l'unité d'accouplement (50) dans le plan de transport (TE), pour former un ensemble, dans laquelle le dispositif d'accouplement (11), dans l'ensemble accouplé, est conçu pour coopérer avec l'unité d'accouplement (50) de telle sorte qu'un mouvement relatif entre l'unité de transport (3A) et l'unité d'accouplement (50) est limité dans au moins un degré de liberté de mouvement, dans laquelle soit l'unité d'accouplement (50) est une autre unité de transport (3B) et les au moins deux unités de transport (3A, 3B) peuvent être accouplées au moyen des dispositifs d'accouplement (11) pour former un ensemble d'unités de transport (TV), dans lequel les unités de transport (3A, 3B) peuvent être déplacées ensemble dans le plan de transport (TE), soit que l'unité d'accouplement (50) est un support d'objet (OT) destiné à la réception d'un objet (O) et l'unité de transport (3A) peut être accouplée au support d'objet (OT) pour former un ensemble de support d'objet (OV), dans lequel le support d'objet (OT) peut être déplacé au moyen de l'unité de transport (3A) dans le plan de transport (TE).

2. Unité de transport selon la revendication 1, **caractérisée en ce que** le dispositif d'accouplement (11) est conçu par complémentarité de formes et/ou à force.

3. Unité de transport selon l'une des revendications 1 ou 2,
**caractérisée en ce que** le dispositif d'accouplement (11) présente au moins une partie d'un dispositif de verrouillage, qui est conçu pour limiter un mouvement relatif entre l'unité de transport (3A) et l'unité d'accouplement (50) dans l'ensemble dans un degré de liberté de mouvement supplémentaire.

4. Unité de transport selon la revendication 3, **caractérisée en ce que** le dispositif de verrouillage peut être actionné par un mouvement relatif entre l'unité de transport (3A) et l'unité d'accouplement (50) ou par une unité d'actionnement (BE) externe **ou en ce que,** sur l'unité de transport (3A) ou l'unité d'accouplement, une unité d'actionnement (BE) pour l'actionnement du dispositif de verrouillage et un actionneur pour l'actionnement de l'unité d'actionnement (BE) sont prévus.

5. Unité de transport selon l'une des revendications 1 à 4,
**caractérisée en ce que,** dans le dispositif d'accouplement (11), au moins un élément d'accouplement (11a) et/ou au moins une unité de réception (11b) sont prévus, dans laquelle un élément d'accouplement (11a) est prévu pour coopérer avec une unité de réception (11b) de l'unité d'accouplement (50) pour l'accouplement.

6. Unité de transport selon la revendication 5, **caractérisée en ce que,** de préférence, en tant que partie du dispositif de verrouillage, au moins une ouverture de serrage (12) et/ou au moins un élément de serrage (13) sont prévus sur au moins un élément d'accouplement (11a) et/ou sur au moins une unité de réception (11b).

7. Unité de transport selon l'une des revendications 1 à 6,
**caractérisée en ce que,** dans le dispositif d'accouplement (11), au moins un élément magnétique (17a, 17b) est prévu.

8. Appareil de transport (1) sous la forme d'un moteur planaire comportant au moins un segment de transport (TSi) qui forme un plan de transport (TE) et comportant au moins une unité de transport (3A) qui peut être déplacée dans le plan de transport (TE) au moins dans deux dimensions, dans lequel, sur le segment de transport (TSi), des bobines d'entraînement (6) ou des aimants permanents mobiles (PM) sont disposés et, sur l'unité de transport (3A), des aimants d'entraînement (4) sont disposés, ou inversement, dans lequel les bobines d'entraînement (6) ou les aimants permanents mobiles (PM) coopèrent de manière magnétique avec les aimants d'entraînement (4) afin de déplacer l'unité de transport (3A) dans le plan de transport (TE) au moins dans deux dimensions, **caractérisé en ce que** l'unité de transport (3A) est conçue selon l'une des revendications 1 à 7, **en ce que**, dans l'appareil de transport (1), au moins une unité d'accouplement (50) est prévue, sur laquelle au moins un dispositif d'accouplement (11) est disposé pour l'accouplement amovible de l'unité de transport (3A) avec l'unité d'accouplement (50), **en ce que** l'unité de transport (3A) et l'unité d'accouplement (50) peuvent être accouplées par un mouvement relatif dans le plan de transport (TE) au moyen des dispositifs d'accouplement (11) au moins temporairement pour former un ensemble, **et en ce que** les dispositifs d'accouplement (11), dans l'ensemble accouplé, coopèrent afin de limiter un mouvement relatif entre l'unité de transport (3A) et l'unité d'accouplement dans au moins un degré de liberté de mouvement, dans lequel l'au moins une unité d'accouplement (50) est une autre unité de transport (3B) et les au moins deux unités de transport (3A, 3B) peuvent être accouplées au moyen des dispositifs d'accouplement (11) pour former un ensemble d'unités de transport (TV) dans lequel les unités de transport (3A, 3B) peuvent être déplacées ensemble dans le plan de transport (TE), **ou en ce que** l'au moins une unité d'accouplement (50) est un support d'objet (OT) destiné à la réception d'un objet (O) et l'unité de transport (3A) peut être accouplée au support d'objet (OT) pour former un ensemble de support d'objet (OV) dans lequel le support d'objet (OT) peut être déplacé au moyen de l'unité de transport (3A) dans le plan de transport (TE).

9. Appareil de transport (1) selon la revendication 8, **caractérisé en ce que** les dispositifs d'accouplement (11) sont réalisés par complémentarité de formes et/ou à force **et/ou en ce que** les dispositifs d'accouplement (11) présentent respectivement au moins une partie d'un dispositif de verrouillage, dans lequel le dispositif de verrouillage est conçu pour limiter un mouvement relatif entre l'unité de transport (3A) et l'unité d'accouplement (50) dans l'ensemble dans un degré de liberté de mouvement supplémentaire.

10. Appareil de transport (1) selon la revendication 9, **caractérisé en ce que** le dispositif de verrouillage peut être actionné par un mouvement relatif entre l'unité de transport (3A) et l'unité d'accouplement (50) **ou en ce que,** dans l'appareil de transport (1), une unité d'actionnement (BE) est prévue pour l'actionnement du dispositif de verrouillage, dans lequel l'unité d'actionnement (BE) est conçue de préférence comme une unité d'actionnement (BE) fixe, en particulier mécanique ou magnétique, et/ou, sur l'unité de transport (3A) ou l'unité d'accouplement (50), une unité d'actionnement (BE) pour l'actionnement du dispositif de verrouillage et un actionneur pour l'actionnement de l'unité d'actionnement (BE) sont prévus.

11. Appareil de transport (1) selon l'une des revendications 8 à 10, **caractérisé en ce que,** dans le dispositif d'accouplement (11) de l'unité de transport (3A), au moins un élément d'accouplement (11a) est prévu et, dans le dispositif d'accouplement (11) de l'unité d'accouplement (50), au moins une unité de réception (11b) est prévue, ou inversement, dans lequel l'élément d'accouplement (11a) est prévu pour coopérer avec l'unité de réception (11b) pour l'accouplement amovible de l'unité de transport (3A) avec l'unité d'accouplement (50), dans lequel de préférence le dispositif de verrouillage présente au moins un élément de serrage (13) et au moins une ouverture de serrage (12) coopérant avec celui-ci, dans lequel l'élément de serrage (13) est disposé sur l'élément d'accouplement (11a) et l'ouverture de serrage (12) est disposée dans l'unité de réception (11b) ou inversement.

12. Appareil de transport (1) selon l'une des revendications 8 à 11, **caractérisé en ce que** les dispositifs d'accouplement (11) présentent respectivement au moins un élément magnétique (17a, 17b), dans lequel les éléments magnétiques (17a, 17b) sont prévus pour générer une force d'attraction magnétique entre l'unité de transport (3A) et l'unité d'accouplement (50).

13. Procédé permettant de faire fonctionner un appareil de transport (1) selon l'une des revendications 8 à 12, **caractérisé en ce que** l'au moins une unité de transport (3A) est déplacée dans le plan de transport (TE) par rapport à l'unité d'accouplement (50) ou inversement, **et en ce que** l'unité de transport (3A) et l'unité d'accouplement (50) sont accouplées pour former un ensemble par le mouvement relatif au moyen des dispositifs d'accouplement (11), dans lequel de préférence le dispositif de verrouillage est actionné dans l'état accouplé.

14. Procédé selon la revendication 13, **caractérisé en ce que,** en tant qu'unité d'accouplement (50), une autre unité de transport (3B) est utilisée, **en ce que** les unités de transport (3A, 3B) sont accouplées pour former un ensemble d'unités de transport (TV) **et en ce que** l'ensemble d'unités de transport (TV) est déplacé dans le plan de transport (TE) en faisant coopérer de manière magnétique au moins des parties des aimants d'entraînement (4) d'une unité de transport parmi les au moins deux unités de transport (3A, 3B) avec les bobines d'entraînement (6) ou les aimants permanents mobiles (PM) du segment de transport (TSi) ou en faisant coopérer de manière magnétique au moins des parties des bobines d'entraînement (6) ou des aimants permanents mobiles (PM) d'une unité de transport parmi les au moins deux unités de transport (3A, 3B) avec les aimants d'entraînement (4) du segment de transport (TSi).

15. Procédé selon la revendication 14, **caractérisé en ce que** l'ensemble d'unités de transport (TV) est déplacé dans un poste de travail dans lequel un processus de travail est réalisé, au cours duquel des forces de processus agissent sur l'ensemble d'unités de transport (TV) et/ou l'ensemble d'unités de transport (TV) est chargé avec au moins un objet **et en ce que** l'ensemble d'unités de transport (TV) est désaccouplé, après la fin du processus de travail, pour former les au moins deux unités de transport (3A, 3B).
